# EUROPÄISCHE PATENTSCHRIFT

(11) **EP 4 258 179 B1**
(45) Veröffentlichungstag und Bekanntmachung des Hinweises auf die Patenterteilung: **17.12.2025**
(21) Anmeldenummer: 23165282.7
(22) Anmeldetag: 30.03.2023
(51) Int. Cl.: G06N 3/09, G06N 5/045, G06N 3/0455, G06N 3/0464

(54) **SYSTEM ZUM ERZEUGEN EINER VON EINEM MENSCHEN WAHRNEHMBAREN ERKLÄRUNGSAUSGABE FÜR EINE VON EINEM ANOMALIEERKENNUNGSMODUL VORHERGESAGTE ANOMALIE AUF HOCHFREQUENTEN SENSORDATEN ODER DAVON ABGELEITETEN GRÖSSEN EINES INDUSTRIELLEN FERTIGUNGSPROZESSES, VERFAHREN UND COMPUTERPROGRAMM ZUR ÜBERWACHUNG EINER AUF KÜNSTLICHER INTELLIGENZ BASIERENDEN ANOMALIEERKENNUNG IN HOCHFREQUENTEN SENSORDATEN ODER DAVON ABGELEITETEN GRÖSSEN EINES INDUSTRIELLEN FERTIGUNGSPROZESSES UND VERFAHREN UND COMPUTERPROGRAMM ZUR ÜBERWACHUNG EINER AUF KÜNSTLICHER INTELLIGENZ BASIERENDEN ANOMALIEERKENNUNG BEI EINER END-OF-LINE AKUSTIKPRÜFUNG EINES GETRIEBES**
SYSTEM FOR GENERATING A HUMAN-PERCEIVABLE EXPLANATORY OUTPUT FOR AN ANOMALY PREDICTED BY AN ANOMALY DETECTION MODULE BASED ON HIGH-FREQUENCY SENSOR DATA OR VARIABLES DERIVED THEREFROM IN AN INDUSTRIAL MANUFACTURING PROCESS, METHOD AND COMPUTERPROGRAM FOR MONITORING ARTIFICIAL INTELLIGENCE-BASED ANOMALY DETECTION IN HIGH-FREQUENCY SENSOR DATA OR VARIABLES DERIVED THEREFROM IN AN INDUSTRIAL MANUFACTURINGPROCESS, AND METHOD AND COMPUTER PROGRAM FOR MONITORING ARTIFICIAL INTELLIGENCE-BASED BASED ANOMALY DETECTION IN AN END-OF-LINE ACOUSTIC TEST OF A GEARBOX
SYSTÈME PERMETTANT DE GÉNÉRER UNE EXPLICATION PERCEPTIBLE PAR L'HOMME POUR UNE ANOMALIE PRÉDITE PAR UN MODULE DE DÉTECTION D'ANOMALIES SUR DES DONNÉES DE CAPTEURS À HAUTE FRÉQUENCE OU DE GRANDEURS DÉRIVÉES DE CELLES-CI D'UN PROCESSUS DE FABRICATION INDUSTRIELLE, PROCÉDÉ ET PROGRAMME INFORMATIQUEPOUR SURVEILLER UNE DÉTECTION D'ANOMALIE BASÉE SUR L'INTELLIGENCE ARTIFICIELLE DANS DES DONNÉES DE CAPTEURS À HAUTE FRÉQUENCE OU DES GRANDEURS DÉRIVÉES DE CELLES-CI D'UN PROCESSUS DE FABRICATION INDUSTRIELLEET PROCÉDÉ ET PROGRAMME INFORMATIQUE POUR SURVEILLER UNE DÉTECTION D'ANOMALIE BASÉE SUR L'INTELLIGENCE ARTIFICIELLE LORS D'UN CONTRÔLE ACOUSTIQUE DE FIN DE LIGNE D'UNE BOÎTE DE VITESSES

(30) Priorität: 07.04.2022 DE 102022203475
(43) Veröffentlichungstag der Anmeldung: 11.10.2023
(73) Patentinhaber: ZF Friedrichshafen AG, 88046 Friedrichshafen (DE)
(72) Erfinder: Thewes, Nicolas, 66113 Saarbrücken (DE); Schneider, Georg, 56182 Urbar (DE)

(56) Entgegenhaltungen:
- CHAN YU-LI ET AL: "Explainable Health State Prediction for Social IoTs through Multi-Channel Attention", 2021 IEEE GLOBAL COMMUNICATIONS CONFERENCE (GLOBECOM), IEEE, 7 December 2021 (2021-12-07), pages 1 - 6, XP034073444, DOI: 10.1109/GLOBECOM46510.2021.9685864
- SENANAYAKA JAGATH SRI LAL ET AL: "Toward Self-Supervised Feature Learning for Online Diagnosis of Multiple Faults in Electric Powertrains", IEEE TRANSACTIONS ON INDUSTRIAL INFORMATICS, IEEE SERVICE CENTER, NEW YORK, NY, US, vol. 17, no. 6, 5 August 2020 (2020-08-05), pages 3772 - 3781, XP011842773, ISSN: 1551-3203, [retrieved on 20210305], DOI: 10.1109/TII.2020.3014422
- HAN DONGQI HANDQ19@MAILS TSINGHUA EDU CN ET AL: "DeepAID: Interpreting and Improving Deep Learning-based Anomaly Detection in Security Applications", PROCEEDINGS OF THE ACM SIGOPS 28TH SYMPOSIUM ON OPERATING SYSTEMS PRINCIPLES, ACMPUB27, NEW YORK, NY, USA, 12 November 2021 (2021-11-12), pages 3197 - 3217, XP058662177, ISBN: 978-1-4503-8709-5, DOI: 10.1145/3460120.3484589

## Beschreibung

Die Erfindung betrifft ein System zum Erzeugen einer von einem Menschen wahrnehmbaren Erklärungsausgabe für eine von einem Anomalieerkennungsmodul vorhergesagte Anomalie auf hochfrequenten Sensordaten oder davon abgeleiteten Größen eines industriellen Fertigungsprozesses. Ferner betrifft die Erfindung ein Verfahren und ein Computerprogramm zur Überwachung einer auf künstlicher Intelligenz basierenden Anomalieerkennung in hochfrequenten Sensordaten oder davon abgeleiteten Größen eines industriellen Fertigungsprozesses. Außerdem betrifft die Erfindung ein Verfahren und ein Computerprogramm zur Überwachung einer auf künstlicher Intelligenz basierenden Anomalieerkennung bei einer End-of-Line Akustikprüfung eines Getriebes.

Folgende Definitionen, Beschreibungen und Ausführungen behalten ihre jeweilige Bedeutung für den gesamten offenbarten Erfindungsgegenstand und finden Anwendung auf den gesamten offenbarten Erfindungsgegenstand.

Industrielle Fertigungsprozesse sind variable und komplexe Prozesse, die entsprechend anfällig für Fehler und Ausfälle sind. Die Prozesse und/oder einzelne Schritte umfassen beispielsweise Urformverfahren, Umformverfahren, Trennverfahren, Fügeverfahren, Beschichtungsverfahren und/oder Stoffeigenschaften-Änderungsverfahren nach DIN 8580. Beispielsweise ist eine End-of-Line Prüfung eines Getriebes, beispielsweise eines Fahrzeug-Getriebes oder eines Getriebes einer Windkraftanlage, umfassend beispielsweise eine Funktions- und/oder Akustikprüfung des Getriebes, ein industrieller Fertigungsprozess. Gleichzeit nimmt im Rahmen der sog. 4. industriellen Revolution die Durchdringung der Fertigungsprozesse mit Sensoren zu, wodurch eine flächendeckende Abbildung der Prozesse durch Daten gewährleistet ist.

Die Sicherstellung eines einwandfreien Ablaufs eines industriellen Prozessschrittes ist mit hohem Aufwand und hohen Kosten verbunden, da Fehlerfeststellung als auch Fehlerbeseitigung häufig manuelle Prozesse sind und zudem reaktiv stattfinden. Die deutsche Anmeldung mit dem Aktenzeichen 102021210107.0 offenbart computerimplementierte Verfahren, Module und ein System zur Anomalieerkennung in industriellen Fertigungsprozessen, mit denen jeweils industrielle Fertigungsprozesse und/oder einzelne Schritte eines industriellen Fertigungsprozesses überwacht werden können, um verbessert Abweichungen oder Anomalien zu erkennen. Das offenbarte System zur Anomalieerkennung ist ein Gesamtsystem, dessen Gehirn Analysemodelle, oder auch Anomalieerkennungsmodelle, bilden. Die Anomalieerkennungsmodelle bewerten basierend auf den Daten einen Zustand und berechnen einen Anomaliewert. Der Anomaliewert bildet den Grad der Anomalie ab, siehe auch deutsche Anmeldung mit dem Aktenzeichen 102021210106.2. Damit werden Anomalien in industriellen Fertigungsprozessen datengetrieben ermittelt, insbesondere durch geordnete, numerische Daten, beispielsweise Sonagramme. Die dort offenbarten Anomalieerkennungsalgorithmen, Anomalieerkennungsmodule und das Anomalieerkennungssystem gehören durch expliziten Bezug zum Inhalt dieser Offenbarung.

Beispielsweise basieren die Analysemodelle zur Anomalieerkennung auf Maschinenlernalgorithmen. Logistische Regression ist hier nur ein Beispiel für ein Analysemodell. Weitere Analysemodelle umfassen beispielsweise Isolationsbäume, auch isolation forest genannt, Autoencoder, generative adversariale Netzwerke, auch generative adversarial networks genannt, Faltungsnetzwerke oder support vector machines. Isolationswald bezeichnet einen Anomalieerkennungsalgorithmus, der Anomalien durch Isolierung identifiziert. Dabei werden Anomalien mithilfe von Binärbäumen isoliert. Isolationswald funktioniert in Situationen gut, in denen der Trainingssatz keine oder wenige Anomalien enthält. Damit ist Isolationswald ein vorteilhaftes Analysemodell.

Die deutsche Anmeldung mit dem Aktenzeichen 102021210106.2 offenbart ein computerimplementiertes Verfahren und ein System zur Anomalieerkennung und ein Verfahren zur Anomalieerkennung in einer akustischen Endprüfung eines Getriebes, mittels denen jeweils basierend auf Zustands-Daten ein Grad einer Zustands-Anomalie abgebildet werden kann. Die dort offenbarten Anomalieerkennungsmodelle und Verfahren zur Berechnung des Anomaliewertes gehören durch expliziten Bezug zum Inhalt dieser Offenbarung.

Dongqi Han, Zhiliang Wang, Wenqi Chen, Ying Zhong, Su Wang, Han Zhang, Jiahai Yang, Xingang Shi, and Xia Yin. 2021. "DeepAID: Interpreting and Improving Deep Learning-based Anomaly Detection in Security Applications". In Proceedings of the 2021 ACM SIGSAC Conference on Computer and Communications Security (CCS '21). Association for Computing Machinery, New York, NY, USA, 3197-3217. https://doi.org/10.1145/3460120.3484589 offenbart ein theoretisches Konzept zur Erkennung von Anomalien in Sicherheitsanwendungen, das eine Anomalie basierend auf einer Differenz zu einer Referenz interpretiert.

Rožanec, Jože, Elena Trajkova, Klemen Kenda, Blaž Fortuna, and Dunja Mladenić. 2021. "Explaining Bad Forecasts in Global Time Series Models" Applied Sciences 11, no. 19: 9243. https://doi.org/10.3390/app11199243 offenbart Anomalieerekennung auf Zeitreihendaten.

Y. -L. Chan and H. -H. Shuai, "Explainable Health State Prediction for Social Iots through Multi-Channel Attention," 2021 IEEE Global Communications Conference (GLOBECOM), Madrid, Spain, 2021, pp. 1-6, doi: 10.1109/GLOBECOM46510.2021.9685864 offenbart ein Konzept zur Erklärbarkeit von Maschinenfehlererkennung anhand Schwingungssignale von mehreren Sensoren.

J. S. L. Senanayaka, H. Van Khang and K. G. Robbersmyr, "Toward Self-Supervised Feature Learning for Online Diagnosis of Multiple Faults in Electric Powertrains," in IEEE Transactions on Industrial Informatics, vol. 17, no. 6, pp. 3772-3781, June 2021, doi: 10.1109/TII.2020.3014422 offenbart ein Fehlerdiagnoseschema für Industrieantriebe mittels auf Support Vector Machine (SVM) -basierter Anomalieerkennung.

Die in dem industriellen Fertigungsprozessen vorkommende Art von Daten sind hochfrequente Daten, das heißt Daten, die durch Sensoren, beispielsweise Temperatursensoren, Vibrationssensoren, Kraftsensoren, Drucksensoren, Akustiksensoren, Messsensoren, Stromsensoren und/oder Spannungssensoren mit einer hohen Abtastrate aufgenommen werden. Die Abtastrate ist abhängig von der jeweiligen Anwendung. Beispielsweise werden im akustischen Bereich Frequenzen oberhalb von 20 kHz als hochfrequent bezeichnet, in der Elektrotechnik oberhalb von 9 kHz und in medizinischen Anwendungen schon ab 1 kHz. Gemeinsam ist diesen Daten, die mit einer hohen Frequenz aufgenommen werden, dass sie sich in ihrer Verarbeitung von anderen Daten unterscheiden. Ein Grund dafür ist die Menge an Datenpunkten, ein anderer die Bedeutung von Frequenzen in den zu analysierenden Daten. Bei hochfrequenten Daten wird häufig das Frequenzspektrum analysiert, beispielsweise mittels Fourier-Transformation.

Basierend auf diesen Daten ist eine der grundlegendsten Aufgaben, die bevorzugt durch Algorithmen aus dem Bereich der künstlichen Intelligenz erledigt werden, die Erkennung von Anomalien innerhalb eines Fertigungsprozesses, eines Fertigungsschrittes oder bei der Prüfung von Bauteilen und/oder Produkten. Um diese Erkennung mit der nötigen Robustheit und dem Vertrauen der Nutzer auszustatten, müssen die algorithmisch erkannten Anomalien, mindestens teilweise, von einem Menschen wirksam beaufsichtigt und durch einen Menschen bewertet werden. Die menschliche Aufsicht dient beispielsweise der Verhinderung oder Minimierung von Risiken für die Sicherheit. Die Bewertung ist im Falle von Algorithmen aus dem Bereich der künstlichen Intelligenz aufgrund der Komplexität der algorithmischen Entscheidungsfindung für einen Menschen ohne Hilfsmittel nur schwer erfüllbar. Dies gilt umso mehr, je komplexer die Daten sind, wie etwa im Falle hochfrequenter Daten.

Künstliche Intelligenz umfasst maschinelles Lernen. Maschinelles Lernen ist eine Technologie, die Computern und anderen Datenverarbeitungsvorrichtungen die Ausführung von Aufgaben durch Lernen aus Daten lehrt, anstatt für die Aufgaben programmiert zu werden. Beispiele für Maschinenlernalgorithmen sind künstliche neuronale Netzwerke, beispielsweise Faltungsnetzwerke, Support Vector Machines und Random Forest Modelle. Die Aufgabe von Algorithmen aus dem Bereich der künstlichen Intelligenz besteht allgemein darin, die in Daten potenziell verborgen Informationen nutzbar zu machen. Eine häufig bearbeitete Aufgabe dabei ist das Klassifizieren von Datensätzen nach Kategorien. Dabei können bereits bekannte Kategorien angewendet werden, ein Beispiel hier ist das Einordnen von Tierbildern in Kategorien der Tierarten. In anderen Fällen sind die Kategorien nur grob bekannt, so zum Beispiel in der für diese Erfindung relevanten Anomalieerkennung, bei der lediglich eine Kategorie bekannt ist (normal) und die Aufgabe darin besteht, abweichende Datenbeispiele zu erkennen (nicht-normal).

Aufgabe der Erfindung war es, wie eine Erklärbarkeit der Ausgaben eines Algorithmus aus dem Bereich der künstlichen Intelligenz, das heißt eine zusätzliche Ausgabe, die es ermöglicht nachzuvollziehen, warum der Algorithmus eine bestimmte Einordnung oder Klassifizierung vorgenommen hat, für einen Menschen generiert werden kann, insbesondere, wie eine für einen Menschen verständliche Erklärbarkeitsausgabe generiert werden kann, die eine Entscheidungsfindung des Algorithmus auf verarbeiteten hochfrequenten Daten, insbesondere bei der Klassifizierung von mit den Sensoren erhaltenen Datensätzen aus industriellen Fertigungsprozessen in normale und nicht-normale Daten, darstellt.

Die Gegenstände der unabhängigen/nebengeordneten Ansprüche lösen diese Aufgabe. Vorteilhafte Ausgestaltungen der Erfindung ergeben sich aus den Definitionen, den Unteransprüchen, den Zeichnungen und der Beschreibung bevorzugter Ausführungsbeispiele.

Nach einem Aspekt stellt die Erfindung ein System bereit zum Erzeugen einer von einem Menschen wahrnehmbaren Erklärungsausgabe für eine von einem Anomalieerkennungsmodul vorhergesagte Anomalie auf hochfrequenten Sensordaten oder davon abgeleiteten Größen eines industriellen Fertigungsprozesses. Das Anomalieerkennungsmodul sagt die Anomalie vorher, wenn das Anomalieerkennungsmodul die Sensordaten oder Bereiche der Sensordaten, die einen Zustand einer Maschine, eines Bauteils und/oder eines Produktes des Fertigungsprozesses beschreiben, als abweichend von normal zu erwarteten beobachtbaren Daten klassifiziert. Das System ist konfiguriert
- basierend auf von dem Anomalieerkennungsmodul verarbeiteten Sensordaten oder Bereichen der Sensordaten, einem Maschinenlernmodell, das das Anomalieerkennungsmodul auf den Sensordaten oder Bereichen der Sensordaten ausführt, und der mittels des Maschinenlernmodells vorhergesagten Anomalie eine Erklärung für die vorhergesagte Anomalie zu berechnen;
- zur Erklärungsberechnung eine Erklärungsmaske zu bestimmen, die die Sensordaten oder Bereiche der Sensordaten, auf denen die Anomalie vorhergesagt wurde, derart verändert, dass das Anomalieerkennungsmodul die mit der Erklärungsmaske maskierten Sensordaten als normal klassifiziert;
- Werte der Erklärungsmaske durch iteratives Prozessieren des Maschinenlernmodells auf den jeweils maskierten Sensordaten zu optimieren;
- die optimierte Erklärungsmaske als die von dem Menschen wahrnehmbare Erklärungsausgabe zu senden, wobei der Mensch basierend auf der optimierten Erklärungsmaske erkennt, welche Sensordaten, Bereiche der Sensordaten oder davon abgeleitete Größen für die von dem Anomalieerkennungsmodul vorhergesagt Anomalie verantwortlich sind.

Das System kann mit HF-xAl abkürzend bezeichnet werden. HF deutet auf die hochfrequenten Sensordaten hin. x bezeichnet zum einen die Daten und zum anderen, dass die künstliche Intelligenz damit erklärbar wird; in dem letztgenannten Kontext ist "x" Abkürzung für explainable. AI steht für artificial intelligence und deutet darauf hin, dass Anomalien mittels künstlicher Intelligenz vorhergesagt werden.

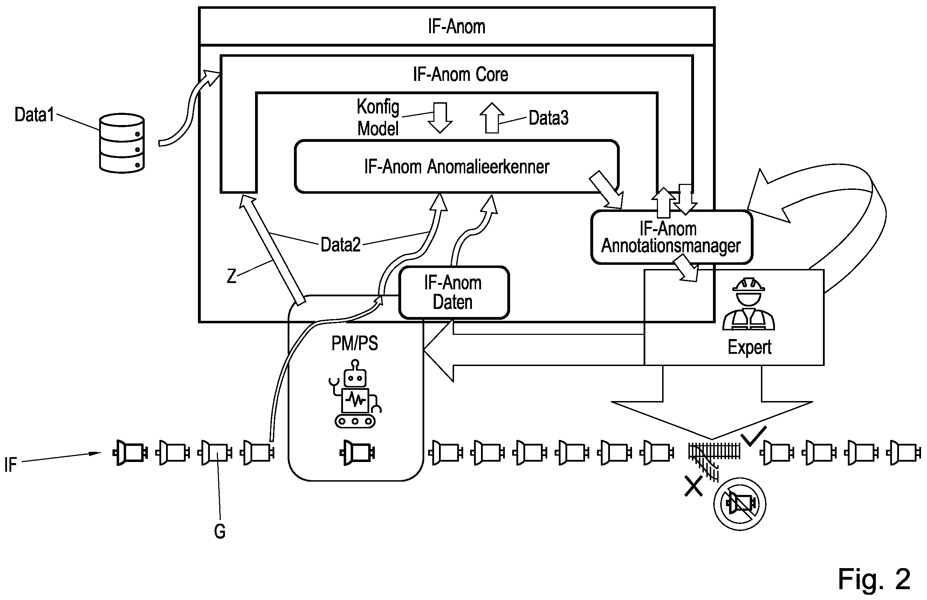

Das Anomalieerkennungsmodul ist beispielsweise das in der deutschen Anmeldung mit dem Aktenzeichen 10 2021 210 107.0 offenbarte und hier in Fig. 2 als Ausführungsbeispiel beschriebene IF-Anom Anomalieerkennungsmodul.

Die Sensordaten werden mit realen Sensoren erfasst. Der Begriff Sensor umfasst reale Sensoren und Sensormodelle. Sensormodelle simulieren reale Sensoren. Die Sensoren sind Temperatursensoren, Vibrationssensoren, Kraft- und Drucksensoren, Optiksensoren umfassend Kamera-, Infrarot-, Lidar- und Radarsensoren, Stromsensoren, Spannungssensoren und/oder Sensoren zur Messung der Größe eines Bauteils sein. Die Sensoren oder Sensormodelle sind technische Komponenten. Welche Sensoren in einem konkreten Fall zur Anwendung kommen, kann abhängig vom jeweiligen Prozessschritt sein. Nach einem Aspekt der Erfindung werden Funktionen einer Maschine, als auch die Eigenschaften eines Bauteils, mittels Sensoren, umfassend die voran genannten Sensoren, überwacht. Nach einem Aspekt umfasst die Erfindung folgende Sensorkonfigurationen:
- Bauteil-bezogene Sensormessung: Geometrie, Aussehen;
- Maschinen-bezogene Messung: Vibrationen und Temperaturen einer oder mehrerer Komponenten;
- Sensor in einem Bauteiltest: Geräusch, Vibration, Stromstärke, Druck.
Nach einem Aspekt übertragen die Sensoren mittels Internet of Things Technologie die Sensordaten untereinander und/oder zu einzelnen Komponenten/Modulen der erfindungsgemäßen Lösung und/oder zu einer Cloud-Infrastruktur. Damit kann eine automatisierte oder autonome Anomalieerkennung realisiert werden. Die Cloud-Infrastruktur umfasst einen Cloud-basierten Datenspeicher. Die Cloud-Infrastruktur ist beispielsweise eine Public, Private oder Hybrid Cloud Infrastruktur.

Ein Beispiel für eine von Sensordaten abgeleitete Größe ist ein Sonagramm. Beispielsweise wird ein von einem Sensor aufgenommenes Zeitsignal beispielsweise mittels einer Fast-Fourier Transformation in einen Frequenzraum umgewandelt. In dem Sonagramm entspricht ein Eintrag der Amplitude oder Energie einer Frequenz in einem Zeitintervall, das heißt es ergibt sich eine Matrix von numerischen Werten, bei der jede Spalte einem Zeitintervall und jede Zeile eine Frequenz entspricht. Das Sonagramm ist in der Regel eine zweidimensionale Matrix mit einer Zeitachse und einer Frequenzachse. Die Einträge eines Sonagramms sind damit geordnet.

Im Beispiel eines Sonagramms ist die Erklärungsmaske eine Matrix, in der Regel eine zweidimensionale Matrix. Die Erklärungsmaske dient dazu, die ursprünglichen Sensordaten oder das ursprüngliche Sonagramm derart zu verändern, dass das Maschinenlernmodell des Anomalieerkennungsmoduls den fraglichen Datensatz als normal erkennt. Dieses Vorgehen ist angelehnt an das Szenario einer gezielten adversarial attack. Die einzelnen Werte der Erklärungsmaske werden nun so verändert, dass das Maschinenlernmodell des Anomalieerkennungsmoduls den ursprünglichen Datensatz nicht mehr als Anomalie erkennt. Die Erklärungsmaske bildet dann die Erklärung, in dem sie Veränderungen abbildet, die nötig sind, um die ursprünglichen Daten von nicht-normal auf normal zu drehen.

Die optimierte Erklärungsmaske präsentiert Bereiche der hochfrequenten Sensordaten oder eines Sonagramms, die entscheidungsrelevant für die Erklärung einer Anomalieerkennung sind. Das System richtet die Präsentation der Erklärungsausgabe darauf, die Wahrnehmung der entscheidungsrelevanten Bereiche durch den Menschen in bestimmter Weise überhaupt erst zu ermöglichen, zu verbessern oder zweckmäßig zu gestalten.

Das erfindungsgemäße System ist ein verteiltes System, beispielsweise ein cloudified System. Die Sensoren sind lokal an Produktionsschritten des industriellen Fertigungsprozesses angeordnet und das Anomalieerkennungsmodul und die Berechnung der Erklärungsausgabe werden in der Cloud durchgeführt. Die Anomalieerkennung wird damit als Funktionssoftware in der Cloud-Infrastruktur ausgeführt. In einem weiteren Beispiel sind die Sensoren und das Anomalieerkennungsmodul lokal in dem industriellen Fertigungsprozess angeordnet und die Berechnung der Erklärungsausgabe erfolgt in der Cloud. Basierend auf den Sensordaten, dem Maschinenlernmodell und der vorhergesagten Anomalie bedeutet in diesem Kontext, dass ein in der Cloud ausgeführtes Auswertemodul über entsprechende Sende- und Empfangseinheiten die Sensordaten, das Maschinenlernmodell und die vorhergesagte Anomalie von dem Anomalieerkennungsmodul empfängt.

Die Module umfassen Hardware- und/oder Softwaremodule. Die Hardwaremodule umfassen Elektronikeinheiten, integrierte Schaltkreise, eingebettete Systeme, Mikrocontroller, Multiprozessor-Systems-on-Chip, Zentralprozessoren und/oder Hardwarebeschleuniger, beispielsweise Graphikprozessoren, Datenspeichereinheiten und Konnektivitätselemente, beispielsweise WLAN-Module, RFID-Module, Bluetooth-Module, NFC-Module.

Die Definition, was eine Anomalie ist, kann beispielsweise auf der Definition basieren, was unter einem Zustand im industriellen Fertigungsprozess zu verstehen ist. Zustand beschreibt die Beschaffenheit/Eigenschaften eines Prozesses, eines Bauteils und/oder einer (Produktions-)Maschine zu einem bestimmten Zeitpunkt oder in einem bestimmten Zeitintervall. Dieser Zustand wird durch Messungen mittels geeigneter Sensoren wie voran beschrieben erfasst. Welche Sensoren geeignet sind, hängt dabei von der Definition des Zustandes als auch des zu beschreibenden Systems ab (Bauteil, Maschine, ...). In umgekehrter Weise beeinflusst auch die Verfügbarkeit entsprechender Sensoren die Definition des Zustandes. Ein Zustand, der nicht durch entsprechende Sensoren zugänglich ist, ist keine sinnvolle Definition eines Zustandes. Ein Zustand kann im industriellen Fertigungsprozess unterschiedliche Ausprägungen haben, die Erfindung umfasst u.a. folgende Zustandsdefinitionen:
- Der Zustand einer Maschine kann durch Gesamtheit der Sensordaten innerhalb eines Zeitintervalls, beispielsweise der letzten 10 Sekunden, definiert sein, sowie zusätzlich durch Bauteil-spezifische Parameter.
- Der Zustand eines Bauteils kann durch die Ergebnisse eines Tests definiert sein, sowie durch weitere Bauteilparameter, umfassend unterschiedliche Bauteil-Varianten.
In Abhängigkeit der jeweiligen Zustandsdefinition wird eine Verteilung der Zustände bestimmt. Eine Anomalie ist ein Zustand, spezifiziert durch entsprechende Sensordaten, der sowohl selten ist als auch, basierend auf den aufgezeichneten Daten, von fast allen anderen Zuständen abweicht, beispielsweise ein erfasster Zustand, der durch hochfrequent aufgenommene Schwingungen gekennzeichnet ist. Eine Anomalie ist selten und anders. Trotzdem kann eine genaue Abgrenzung zwischen normal und nicht-normal häufig schwierig und in vielen Fällen mit den verfügbaren Daten sogar nicht eindeutig möglich sein, sodass letztendlich ein Zustand immer nur mit einer gewissen Wahrscheinlichkeit nicht-normal ist. Um diesem Umstand gerecht zu werden, wird der menschliche Überprüfer/Bewerter vorgeschlagen.

Die Erklärungsausgabe bezieht sich auf die Erklärbarkeit von Algorithmen aus dem Bereich der künstlichen Intelligenz. Für eine konkrete Einordnung/Klassifizierung eines Datensatzes in eine Kategorie, beispielsweise nicht-normal, wird die Erklärungsausgabe als eine zusätzliche Ausgabe erzeugt, die es einem Menschen ermöglicht nachzuvollziehen, warum genau diese Klassifizierung vorgenommen wurde. Das System ermöglicht die Erklärbarkeit von Algorithmen aus dem Bereich der künstlichen Intelligenz bei Anwendung auf hochfrequenten Daten. Hochfrequente Daten stellen Menschen vor eine besondere Herausforderung, da sie sich der alltäglichen Erfahrung, wie es beispielsweise bei normalen frequentierten Bildern und tabellarischen Daten der Fall ist, entziehen. Das System unterstützt Menschen, die Entscheidung eines Algorithmus aus dem Bereich der künstlichen Intelligenz basierend auf der Verarbeitung hochfrequenter Daten nachzuvollziehen. Die Nachvollziehbarkeit erfüllt dabei verschiedene Aufgaben, die im industriellen Kontext von Bedeutung sind, beispielswiese:
- Begründung: Die Erklärungsausgabe liefert eine Begründung für die getroffene Klassifizierung oder die vorhergesagte Anomalie. Damit kann Vertrauen in die Verwendung von Automatisierung basierend auf künstlicher Intelligenz geschaffen werden und, falls erforderlich, können regulatorische Anforderungen erfüllt werden.
- Kontrolle: Datensätze, die zum Trainieren von Algorithmen aus dem Bereich der künstlichen Intelligenz verwendet werden, sind selten perfekt, es muss daher sichergestellt werden, dass die Aspekte, die ein derartiger Algorithmus zur Entscheidung heranzieht, für das Problem sinnvoll und damit robust sind. So wird gewährleistet, dass der Algorithmus auch auf Beispielen außerhalb der zum initialen Trainieren und Testen verwendeten Daten sinnvolle Ergebnisse liefert. Insbesondere können so auch Ansätze erarbeitet werden, wenn ein Algorithmus ein falsches Ergebnis liefert.
- Verbesserung: Je besser ein System verstanden ist, umso besser können weitere Verbesserungen erarbeitet werden. Die Erklärbarkeit von Algorithmen aus dem Bereich der künstlichen Intelligenz spielt also auch eine entscheidende Rolle in ihrer Entwicklung und Weiterentwicklung.
- Entdeckung: Eine entscheidende Frage nach der Erkennung von Anomalien in einer industriellen Fertigung ist, wodurch die Anomalie entsteht und damit wie sie abgestellt werden kann, was durch den Begriff Root-Cause-Analysis bezeichnet wird. Die Erklärbarkeit einer als nicht-normal klassifizierten Sensordatenmenge kann dabei entscheidende Hinweise liefern.
Die genannten Aspekte gewinnen zusätzlich an Relevanz, wenn das System darauf ausgelegt ist, stellenweise autonom zu agieren, was in industriellen Anwendungen in der Regel das Ziel ist.

Erfindungsgemäß wird die Erklärungsausgabe über eine Mensch-Maschinen-Schnittstelle des Systems an den Menschen gesendet. Das System unterstützt damit den Menschen durch eine Mensch-Maschinen-Schnittstelle bei der Ausführung der Überprüfung der Anomalieerkennung.

Durch das System kann das Anomalieerkennungsmodul von natürlichen Personen überwacht werden. Die menschliche Aufsicht dient dabei der Verhinderung oder Minimierung von Sicherheitsrisiken, die entstehen, wenn bei dem Anomalieerkennungsmodul Fehler auftreten.

Nach einem weiteren Aspekt werden Anomalien annotiert, um einen höheren Detailgrad bereitzustellen. Nach einem Aspekt gliedert sich eine Annotation in mehrere (Detail-)Ebenen, zum Beispiel in drei Ebenen. Dabei umfasst eine erste Ebene eine binäre Klassifikation des Überprüfers, beispielsweise false-positive-Ereignis. In der zweiten Ebene kann der Überprüfer beispielsweise das betroffene Bauteil näher spezifizieren. In der dritten Ebene kann der Überprüfer beispielsweise nähere Angaben zu seiner Überprüfung/seinem Ergebnis machen. Nach einem weiteren Aspekt werden die Annotationen beispielsweise online in Form einer Tabelle/Datei zurückgemeldet.

Ein weiterer Aspekt der Erfindung betrifft eine Verwendung des erfindungsgemäßen Systems während einer Modellentwicklung eines Anomalieerkennungsmoduls. Basierend auf einer Erklärungsausgabe des Systems wird in einem Trainingsprozess eines Maschinenlernmodells, das von dem Anomalieerkennungsmodul ausgeführt wird, sichergestellt, dass keine falschen, zufälligen oder irrelevanten Aspekte von Trainingsdaten gelernt werden. Damit können Datensätze, die zum Trainieren von Algorithmen aus dem Bereich der künstlichen Intelligenz verwendet werden, kontrolliert werden. Es wird damit sichergestellt, dass die Aspekte, die zur Entscheidung heranzogen werden, sinnvoll und robust sind.

Das System kann ferner in folgenden Einsatzszenarien verwendet werden:
- Einsatz in prototypischem Betrieb der Anomalieerkennung: Vertrauen der menschlichen Mitarbeiter gewinnen, indem gezeigt wird, dass die Anomalie-Vorhersagen auf relevanten Aspekten der Daten basieren;
- Einsatz während des Betriebes in Stichproben: Ergebnisse der Anomalieerkennung überprüfen und somit eine hohe Qualität der Methode und Vertrauen in die Methode gewährleisten.

Zusätzlich können die Erklärungsausgaben gemeinsam mit den Ergebnissen der Anomalieerkennung gespeichert werden für spätere, weitergehende Analysen, um mögliche regulatorische Anforderungen, beispielsweise nach Transparenz zu erfüllen. Solche Anforderungen werden beispielsweise in dem sog. EU-Act zur Regulierung von künstlicher Intelligenz gefordert.

Nach einem weiteren Aspekt stellt die Erfindung ein Verfahren bereit zur Überwachung einer auf künstlicher Intelligenz basierenden Anomalieerkennung in hochfrequenten Sensordaten oder davon abgeleiteten Größen eines industriellen Fertigungsprozesses. Das Verfahren umfasst die Schritte:
- Erhalten von einem Anomalieerkennungsmodul verarbeiteten Sensordaten, auf denen ein von dem Anomalieerkennungsmodul ausgeführtes Maschinenlernmodell eine Anomalie vorhergesagt hat, Erhalten des Maschinenlernmodells und Erhalten der vorhergesagten Anomalie;
- Erzeugen einer Erklärungsausgabe für die vorhergesagte Anomalie;
- Senden der Erklärungsausgabe an einen menschlichen Bewerter;
- menschliches Bewerten der vorhergesagten Anomalie in eine richtig oder falsch vorhergesagte Anomalie basierend auf der Erklärungsausgabe;
- Senden der Bewertung an ein System, das Anomalieerkennungsmodul und/oder an einen jeweils betroffenen Produktionsschritt des industriellen Fertigungsprozesses mittels einer Mensch-Maschinen-Schnittstelle.

Nach einem Aspekt wird die Erklärungsausgabe mittels eines erfindungsgemäßen Systems erzeugt.

Nach einem weiteren Aspekt stellt die Erfindung ein Verfahren bereit zur Überwachung einer auf künstlicher Intelligenz basierenden Anomalieerkennung bei einer End-of-Line Akustikprüfung eines Getriebes. Das Verfahren umfasst die Schritte:
- Antreiben des Getriebes mit einem Drehzahlprofil, Messen des entstehenden Körperschalls mittels Akustiksensoren und Erhalten von Körperschall-Zeitreihen;
- Transformieren der Körperschall-Zeitreihen in einen Frequenzraum und Erhalten von Sonagrammen;
- basierend auf vorgegebenen Grenzwerten für bestimmte Frequenz-Bereiche Klassifizieren der Sonagramme in die Klassen normal und nicht-normal;
- Prozessieren der Sonagramme durch ein künstliches neuronales Netzwerk, das trainiert ist, auf den Sonagrammen Anomalien vorherzusagen;
- falls das künstliche neuronale Netzwerk auf einem als normal klassifizierten Sonagramm eine Anomalie vorhersagt, Erzeugen einer Erklärungsausgabe für die vorhergesagte Anomalie;
- basierend auf der Erklärungsausgabe Anzeigen einem menschlichen Bewerter der Bereiche des Sonagramms, die für die vorhergesagte Anomalie verantwortlich sind.

Die Erklärungsausgabe wird mittels eines erfindungsgemäßen Systems erzeugt.

Die erfindungsgemäßen Verfahren können computerimplementiert sein.

Nach einem weiteren Aspekt stellt die Erfindung ein Computerprogramm bereit zur Überwachung einer auf künstlicher Intelligenz basierenden Anomalieerkennung in hochfrequenten Sensordaten oder davon abgeleiteten Größen eines industriellen Fertigungsprozesses. Das Computerprogramm umfasst Befehle, die bewirken, dass ein Computer die Schritte des Verfahrens zur Überwachung einer auf künstlicher Intelligenz basierenden Anomalieerkennung in hochfrequenten Sensordaten oder davon abgeleiteten Größen eines industriellen Fertigungsprozesses ausführt, wenn das Computerprogramm auf dem Computer läuft.

Die Befehle der Computerprogramme umfassen Maschinenbefehle, Quelltext oder Objektcode geschrieben in Assemblersprache, einer objektorientierten Programmiersprache, beispielsweise C++, oder in einer prozeduralen Programmiersprache, beispielsweise C. Die Computerprogramme sind nach einem Aspekt Hardware unabhängige Anwendungsprogramme, die beispielsweise über Datenträger oder Datenträgersignale mittels Software Over The Air Technologie bereitgestellt werden.

Erfindungsgemäß ist das System konfiguriert, die optimierte Erklärungsmaske für den Menschen visuell wahrnehmbar darzustellen. Nach einem weiteren Aspekt ist das System konfiguriert, die optimierte Erklärungsmaske, eine Kombination aus initialen Sensordaten oder davon abgeleiteten Größen und der optimierten Erklärungsmaske oder eine Nebeneinanderdarstellung der initialen Sensordaten oder davon abgeleiteten Größen und der optimierten Erklärungsmaske für den Menschen visuell wahrnehmbar darzustellen. Eine Kombination ist beispielsweise eine Addition der optimierten Erklärungsmaske auf die initialen/ursprünglichen Sensordaten oder eine entsprechende Multiplikation. Es kann auch eine Erklärungsmaske mit einer niedrigeren Dimension als die initialen Sensordaten kombiniert werden. Damit wird die Erklärungsausgabe für die visuelle Wahrnehmung aufbereitet. Die Nebeneinanderdarstellung der initialen Sensordaten oder davon abgeleiteten Größen und der optimierten Erklärungsausgabe ermöglicht es dem Bewerter verbessert, die für die Entscheidung relevanten Stellen in den initialen Sensordaten zu erkennen und zu bewerten.

Nach einem Aspekt ist das System konfiguriert, die Erklärungsausgabe als ein hörbares Signal zu erzeugen. Der menschliche Bewerter ist in diesem Fall in der Lage, Geräuschunterschiede zu hören und zu bewerten.

Nach einem weiteren Aspekt ist das System konfiguriert, zusätzlich zur visuellen oder Audio-Ausgabe der Erklärung eine Ausgabe in Form eines Reports zu erzeugen. Beispielsweise beschreibt ein Report, der zu einer Sonagramm-basierten Erklärungsausgabe gehört, in Textform bei welchen Frequenzen und zu welchen Zeiten die Amplitude/Anregung um wieviel Prozent zu hoch war.

Nach einem weiteren Aspekt ist das System konfiguriert, die Werte der Erklärungsmaske unter der oder den Randbedingungen zu optimieren, dass
- die Veränderung initialer Sensordaten oder davon abgeleiteter Größen minimal ist;
- die Veränderung der initialen Sensordaten oder davon abgeleiteter Größen auf lokalisierte Bereiche der Sensordaten fokussiert ist;
- die Veränderung zusammenhängende Bereiche der Sensordaten oder davon abgeleiteter Größen gegenüber punktuellen Sensordaten favorisiert; und/oder
- die veränderten Werte im Bereich erwartbarer beobachtbarer Werte oder physikalisch möglicher Werte liegen.
Die Randbedingungen oder Restriktionen erzeugen einen Mehrwert im Hinblick auf die Erklärbarkeit. Beispielsweise werden durch Favorisierung zusammenhängender Bereiche eine bessere Interpretierbarkeit für einen Menschen erreicht. Die Randbedingungen können beispielsweise in Form von Regularisierungstermen in die Optimierung einfließen. Die genaue Ausgestaltung und Gewichtung der verschiedenen Restriktionen kann nach einem Aspekt von einem Nutzer des Systems konfiguriert werden. Somit kann der Nutzer verschiedene Konfigurationen wählen, die zur Berechnung der Erklärungsausgabe verwendet werden und so in einem iterativen Verfahren eine auf den konkreten Anwendungsfall angepasste Erklärungsausgabe erzeugen. Nach einem weiteren Aspekt hat der Nutzer die Möglichkeit, aus einer Reihe von Standardkonfigurationen auszuwählen, die in vielen Fällen zu guten Ergebnissen führen. Einmal angepasst, wird die gewählte Konfiguration dann standardmäßig für alle folgenden erkannten Anomalien umgesetzt. Dabei ist es auch möglich, mehrere Konfigurationen zu speichern, sodass die angewendete Konfiguration abhängig von beispielsweise Metadaten des zu erklärenden Beispiels gewählt wird.

Nach einem weiteren Aspekt ist das System konfiguriert, initiale Sensordaten oder davon abgeleitete Größen und/oder die Erklärungsmaske mit Zufallswerten zu stören. Beispielsweise wird das durch die Erklärungsmaske geänderte Sonagramm in jedem Optimierungsdurchlauf durch Zufallswerte gestört. Dazu wird beispielsweise eine Matrix der gleichen Dimension wie ein Ursprungssonagramm und bestehend aus zufälligen Werten zu Sonagramm und/oder Erklärungsmaske hinzuaddiert. Eine derartige Störung resultiert in verbesserten Erklärungsmasken, da verhindert wird, dass die Erklärungsmaske sich auf nur scheinbar optimalen Werten/lokalen Minima einpendelt. Es wurde erkannt, dass damit die Erklärungsausgabe verbessert wird. Die Störung mit Zufallswerten kann das Erklärungsergebnis beeinflussen. Das System startet mit Parametern, die in vielen Fällen gute Ergebnisse liefern. Darüber hinaus verfeinern die Anwender des Systems in einem iterativen Vorgehen die Parameter anwendungsspezifisch.

Nach einem weiteren Aspekt hat die Erklärungsmaske die gleiche Dimension wie initiale Sensordaten oder davon abgeleitete Größen und das System ist konfiguriert, die Erklärungsmaske auf initiale Sensordaten oder davon abgeleitete Größen iterativ zu addieren und/oder die Erklärungsmaske iterativ mit initialen Sensordaten oder davon abgeleitete Größen zu multiplizieren. Wird beispielsweise aus den initialen Sensordaten ein Sonagramm abgeleitet in Form einer zweidimensionalen Matrix, dann ist die Erklärungsmaske deckungsgleich zu dem Sonagramm. Addition und Multiplikation können zu unterschiedlichen Erklärungsergebnissen führen. Damit kann der Nutzer des Systems unterschiedliche Konfigurationen testen.

Nach einem weiteren Aspekt hat die Erklärungsmaske initial eine niedrigere Dimension als initiale Sensordaten oder davon abgeleitete Größen und das System ist konfiguriert, mittels Upsampling eine Erklärungsmaske zu bestimmen, die die gleiche Dimension hat wie initiale Sensordaten oder davon abgeleitete Größen. Beispielsweise besteht ein Sonagramm aus einer sehr hohen Anzahl an einzelnen Werten. Damit ergeben sich für eine Erklärungsmaske, die das Klassifikationsergebnis des Maschinenlernmodells des Anomalieerkennungsmoduls umdrehen soll, sehr viele Möglichkeiten der Beeinflussung. Um aber eine Erklärungsmaske zu erzeugen, die einen Mehrwert im Hinblick auf Erklärbarkeit liefert, sollte die resultierende Struktur möglichst einfach und regelmäßig sein. Zu diesem Zweck werden der Erklärungsmaske Freiheitsgrade genommen, indem mit einer Erklärungsmaske niedrigerer Dimension als das zu erklärende Sonagramm gestartet wird. Erst über ein deterministisches Upsampling wird eine Erklärungsmaske erzeugt, die die gleiche Dimension wie das ursprüngliche Sonagramm hat.

Nach einem weiteren Aspekt umfasst das System
- ein Dateneingabemodul, das die von dem Anomalieerkennungsmodul verarbeiteten Sensordaten oder Bereiche der Sensordaten, das Maschinenlernmodell, das das Anomalieerkennungsmodul auf den Sensordaten oder Bereichen der Sensordaten ausführt, und die mittels des Maschinenlernmodells vorhergesagte Anomalie erhält;
- ein Auswertemodul, das die von dem Dateneingabemodul erhaltenen Daten und das erhaltenen Maschinenlernmodell erhält und basierend darauf die Erklärungsausgabe erzeugt, wobei das Auswertemodul ein erstes Sendemodul, das die Erklärungsausgabe an den Menschen sendet, umfasst;
- ein Speichermodul umfassend ein Empfangsmodul, das eine von dem Menschen basierend auf der Erklärungsausgabe vorgenommene Bewertung der vorhergesagten Anomalie als eine richtig oder falsch vorhergesagte Anomalie empfängt, wobei das Speichermodul die von dem Dateneingabemodul erhaltenen Daten und das erhaltenen Maschinenlernmodell, die von dem Auswertemodul erzeugte Erklärungsausgabe und die von dem Empfangsmodul empfangene Bewertung empfängt und speichert;
- ein zweites Sendemodul, das die von dem Menschen vorgenommene Bewertung der vorhergesagten Anomalie in eine richtig oder falsch vorhergesagte Anomalie an das Anomalieerkennungsmodul sendet zur Verbesserung des Maschinenlernmodells.

Das Dateneingabemodul kann eine Datenschnittstelle zwischen dem Anomalieerkennungsmodul und dem System sein. In einer cloudified Ausführung, in der das System in einer Cloud ausgeführt wird, ist die Datenschnittstelle beispielsweise eine Funkschnittstelle. Dadurch, dass das System unter anderem das Maschinenlernmodell von dem Anomalieerkennungsmodul über das Dateneingabemodul erhält, kann das System die Erklärungsmaske lokal, beispielsweise in der Cloud oder durch das Auswertemodul des Systems, iterativ optimieren. Während der Optimierung ist dann kein Datenaustausch mit dem Anomalieerkennungsmodul nötig. Damit wird Rechenzeit eingespart.

Nach einem weiteren Aspekt ist das Dateneingabemodul konfiguriert, die vom Anomalieerkennungsmodul erhaltenen Daten auf Gültigkeit zu überprüfen. Ist beispielsweise für die Sensordaten der Datentyp Gleitkommazahl vorgegeben, überprüft das Dateneingabemodul, ob die erhaltenen Sensordaten als Gleitkommazahlen vorliegen. Metadaten können in einem anderen Datenformat vorliegen. Basierend auf dieser Prüfung werden nach einem weiteren Aspekt die Daten an dieser Stelle bereits soweit möglich korrigiert oder es wird eine Rückmeldung an einen Operator ausgelöst, in der die Problematik dargestellt wird und die weitere Verarbeitung wird bis zu der geforderten Berichtigung pausiert.

Das Auswertemodul entspricht einem Erklärungsgenerator und kann Hardwarebeschleuniger umfassen, die konfiguriert sind, die Erklärungsmaske zu optimieren. Beispielsweise kann das Auswertemodul einen oder mehrere Graphikprozessoren umfassen. Das Auswertemodul umfasst nach einem Aspekt mehrere Submodule, beispielsweise vier Submodule, beispielsweise ein erstes Submodul für die Erklärungsberechnung, ein zweites Submodul für eine Ähnlichkeitsberechnung, ein drittes Submodul für eine Erklärungskonvertierung und ein viertes Submodul für eine Aufbereitung der Erklärungsausgabe. Das erste Submodul optimiert die Erklärungsmaske. Das zweite Submodul gleicht aktuell zu bewertende Anomalien mit bereits bewerten Anomalien ab über einen Datenaustausch mit dem Speichermodul. Das dritte Submodul kann die Erklärungsausgabe in einen korrespondierenden Datenraum umrechnen, um den Bewerter bei der Beurteilung weiter zu unterstützen. Das vierte Submodul bereite die Erklärungsausgabe für eine visuelle oder eine Audio-Wahrnehmung auf.

Das Speichermodul ist nach einem Aspekt ein Cloudspeicher.

Nach einem weiteren Aspekt ist das System konfiguriert, bei der Erklärung einer aktuell vorhergesagten Anomalie Sensordaten oder Bereiche der Sensordaten für diese aktuelle Anomalie mit in einem Speichermodul des Systems gespeicherten Sensordaten vorhergesagter Anomalien zu vergleichen, eine Erklärungsausgabe für diese aktuelle Anomalie mit in dem Speichermodul gespeicherten Erklärungsausgaben vorhergesagter Anomalien zu vergleichen und/oder eine Kombination aus den Sensordaten und der Erklärungsausgabe jeweils für diese aktuelle Anomalie mit in dem Speichermodul gespeicherten entsprechenden Kombinationen vorhergesagter Anomalien zu vergleichen. Das System ist konfiguriert, die Vergleiche durch Ausführen eines Algorithmus, in dem Abstandsmaße implementiert sind, zu bestimmen. Der Vergleich kann damit auf drei Ebenen erfolgen. Damit wird sichergestellt, dass strukturelle Ähnlichkeiten sowohl zwischen Grundmessungen gefunden werden, als auch zwischen Fehlerbildern und zuletzt auch zwischen eigentlich ähnlichen Produkten/Bauteilen, die aber durch Fehler während der Produktion unterschiedliche Messungen ergeben haben.

Beispielsweise wird der Vergleich oder der Algorithmus von dem zweiten Submodul für eine Ähnlichkeitsberechnung durchgeführt. Der Algorithmus kann den Vergleich basierend auf einem einfachen Abstandsmaß, beispielsweise euklidischer Abstand, ausführen. Nach einem Aspekt führt der Algorithmus eine Cosinus-Distanz auf AutoEncoder Embeddings durch.

Die Cosinus-Distanz oder auch Kosinus-Ähnlichkeit genannt ist ein Maß für die Ähnlichkeit zweier Vektoren. Dabei wird der Kosinus des Winkels zwischen den beiden Vektoren bestimmt. Die Kosinus-Ähnlichkeit ist zum Vergleich von Daten, insbesondere hinsichtlich semantischen Zusammenhängen, vorteilhaft. Nach einem Aspekt ist der Algorithmus der in US4839853 offenbarte Latent Semantic Analysis Algorithmus, in dem eine Suchanfrage über die Kosinus-Ähnlichkeit mit einer Datei oder einem Dokument verglichen werden kann.

Zur Einordnung einer fraglichen Anomalie in den Kontext der bereits überprüften potenziellen Anomalien zeigt das System nach einem Aspekt standardmäßig die drei ähnlichsten früher überprüften Anomalien. Damit wird gewährleistet, dass ein Überprüfer zum einen effizient arbeiten kann und zum anderen eine gewissen Konsistenz in den Bewertungen entsteht. Werden dem Bewerter die früher bewerteten Anomalien angezeigt, so ist er auch in der Lage, nachträglich seine Einschätzung zu ändern, falls sich neue Erkenntnisse ergeben haben. Beispielsweise können so Erkenntnisse über Bauteile eingetragen werden, bei denen eine Anomalie vom System erkannt wurde und die im Labor genauer untersucht wurden, um den Fehler zu finden.

Nach einem weiteren Aspekt ist das System konfiguriert, initiale Sensordaten in einem anderen Datenraum darzustellen und die Erklärungsausgabe in diesem Datenraum zu erzeugen. Beispielsweise erfolgt die Darstellung in einem anderen Datentraum mittels des dritten Submoduls für eine Erklärungskonvertierung. Damit wird eine wichtige Informationsquelle zur Beurteilung der Erklärung und damit der potenziellen Anomalie eröffnet. Ist das ursprüngliche Signal, auf dem die Anomalieerkennung gearbeitet hat, beispielsweise ein Vibration/Zeitsignal, zum Beispiel ein akustisches Signal, so ist zunächst auch die errechnete Erklärung dieser Art. Für einen Überprüfer stellt das System die Möglichkeit bereit, dieses Signal auch im Frequenzraum zu betrachten, beispielsweise durch Fourier-Transformation. So hat ein Überprüfer die Möglichkeit, ein eigentlich akustisches Signal auch visuell zu betrachten und zu beurteilen. Umgekehrt ist es auch möglich, ein Signal, das ursprünglich im Frequenzraum vorhanden war, in ein akustisches Signal umzurechnen, und sich so das nicht-normale Geräusch anzuhören.

Falls es bei der Umrechnung eines Ursprungssignals in einen anderen Datenraum zu einer Unterbestimmtheit kommt, sind nach einem Aspekt in dem System Strategien implementiert, damit umzugehen. Zum einen besteht die Möglichkeit, dass das System erfahrungsgemäß für ein Problem gut funktionierende Standardwerte annimmt. Das können sowohl ein einzelner Wert sein für einen offenen Parameter als auch eine ganze Auswahl, wobei der Bewerter anschließend die Möglichkeit hat, das brauchbarste Ergebnis auszuwählen. Zum anderen entsteht hier eine mögliche Kopplung zur Ähnlichkeitsberechnung. Wenn bei einer Erklärungskonvertierung eine Parameter-Unterbestimmtheit auftritt, so können die freien Parameter mit solchen Werten gefüllt werden, die bei ähnlichen Erklärungen und Ursprungsdaten gute Ergebnisse geliefert haben.

Nach einem weiteren Aspekt ist das System konfiguriert, für die Sensordaten, Bereiche der Sensordaten oder davon abgeleitete Größen, die für die von dem Anomalieerkennungsmodul vorhergesagte Anomalie verantwortlich sind, eine Abtastung mit einer erhöhten Frequenz einzuleiten. Damit wird eine weitere Verbesserung der Datenaufnahme erreicht. Beispielsweise könnte das System die Empfehlung, beispielsweise in Form einer Metadatei, ausgeben, dass die besonders relevanten Bereiche mit einer höheren Frequenz abgetastet werden sollten.

Die Erfindung wird in den folgenden Ausführungsbeispielen verdeutlicht. Es zeigen:
Fig. 1 eine schematische Darstellung eines Ausführungsbeispiels eines industriellen Fertigungsprozesses,
Fig. 2 ein erste Ausführungsbeispiel eines Anomalieerkennungsmoduls,
Fig. 3 ein Ausführungsbeispiel eines erfindungsgemäßen Systems,
Fig. 4a eine Detaildarstellung des Systems aus Fig. 3,
Fig. 4b ein Ausführungsbeispiel eines erfindungsgemäßen Verfahrens zur Überwachung einer auf künstlicher Intelligenz basierenden Anomalieerkennung in hochfrequenten Sensordaten oder davon abgeleiteten Größen eines industriellen Fertigungsprozesses,
Fig. 5a ein Ausführungsbeispiel initialer Sensordaten in Form eines Sonagramms,
Fig. 5b Beispielwerte des Sonagramms aus Fig. 5a,
Fig. 5c ein Ausführungsbeispiel einer initialen Erklärungsmaske,
Fig. 6a das Sonagramm aus Fig. 5a,
Fig. 6b ein Ausführungsbeispiel einer optimierten Erklärungsmaske,
Fig. 6c ein Ausführungsbeispiel einer visuell wahrnehmbaren Erklärungsausgabe,
Fig. 7a ein Ausführungsbeispiel eines Sonagramms,
Fig. 7b eine erfindungsgemäß erzeugte Erklärungsausgabe für das Sonagramm aus Fig. 7a und
Fig. 8 ein Ausführungsbeispiel eines erfindungsgemäßen Verfahrens zur Überwachung einer auf künstlicher Intelligenz basierenden Anomalieerkennung bei einer End-of-Line Akustikprüfung eines Getriebes.

In den Figuren bezeichnen gleiche Bezugszeichen gleiche oder funktionsähnliche Bezugsteile. Übersichtshalber werden in den einzelnen Figuren nur die jeweils relevanten Bezugsteile hervorgehoben.

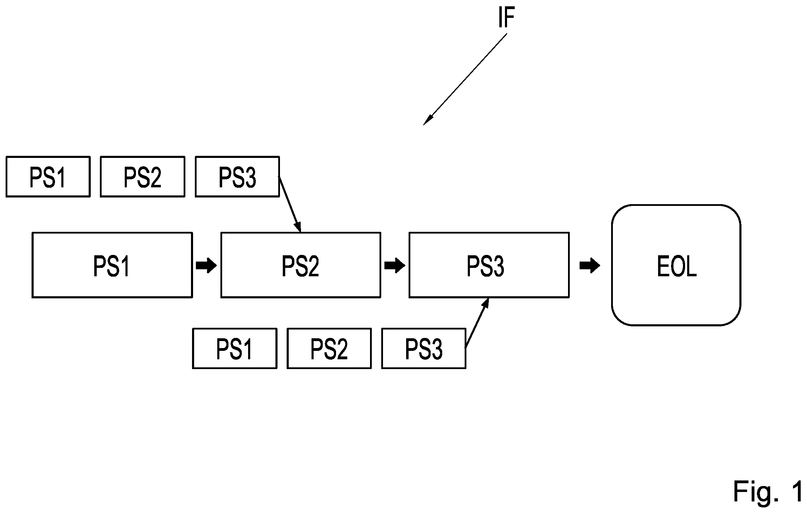

Die industrielle Fertigung gliedert sich in der Regel in sogenannte Produktionslinien, die wiederum in einzelne aufeinander aufbauende Produktionsschritte PS unterteilt sind. Eine Produktionslinie hat dabei eine bestimmte Produktionskapazität, zum Beispiel 100 Produkte pro Tag. Eine Skalierung der Produktion darüber hinaus geschieht durch den Einsatz mehrerer gleichartiger Produktionslinien, in welchen dann das gleiche Produkt gefertigt wird. Neben einer Hauptlinie existieren Nebenlinien, in den einzelne Komponenten des Hauptproduktes gefertigt werden. Ein einzelner Produktionsschritt PS kann unterschiedliche Ausprägungen haben, es kann beispielsweise eine Komponente verschraubt werden, ein Bauteil gefräst werden oder eine Qualitätsprüfung eines Bauteils durchgeführt werden. Fig. 1 zeigt einen industriellen Fertigungsprozess IF umfassend eine Hauptlinie und zwei Nebenlinien. Die Hauptlinie umfasst die Produktionsschritte PS1, PS2, PS3. Eine der Nebenlinien umfasst beispielsweise ebenfalls drei Produktionsschritte PS1, PS2, PS3 und betrifft beispielsweise den Produktionsschritte PS2 der Hauptlinie. Die weitere Nebenlinie umfasst beispielsweise ebenfalls drei Produktionsschritte PS1, PS2, PS3 und betrifft beispielsweise den Produktionsschritt PS3 der Hauptlinie. Am Ende der Hauptlinie wird eine End Of Line Prüfung EOL durchgeführt.

Das Anomalieerkennungsmodul IF-Anom überwacht beispielsweise die Produktionsschritte PS, PS1, PS2, PS3 und/oder die jeweils zugehörigen Produktionsmaschinen PM im Hinblick auf auftretende Anomalien, siehe Fig. 2.

Das Anomalieerkennungsmodul IF-Anom integriert folgende Schritte bzw. Module: Datenbasierte Definition eines Zustandes Z des zu überwachenden Prozesses, Datenspeicherung und Verarbeitung aller notwendigen, Training einer Anomalieerkennung basierend auf historischen Daten Data1, Integration eines menschlichen Überprüfers Expert zur Kontrolle von erkannten/vorhergesagten Anomalien sowie zur Generierung weiterer Annotationen zur gezielten Erweiterung des Trainingsdatenbestandes Data1, Erkennung/Vorhersage von Anomalien, Verarbeitung der Bewertung des menschlichen Überprüfers Expert und basierend darauf kontinuierlich Anpassung und Verbesserung der Anomalieerkennung.

Die Grundfunktionalitäten, wie Speichern und erweitern des Datenbestandes, Einrichten von Konfigurationen trainierter Modelle Konfig-Model, Anfrage von Annotationen zur Erweiterung der Datengrundlage, werden dabei von einem ersten Modul IF-Anom Core übernommen.

Die Aufgabe der Erkennung/Vorhersage potenzieller Anomalien wird durch ein zweites Modul IF-Anom Anomalieerkenner durchgeführt. Dabei werden vom zu überwachenden Produktionsschritt PS oder Produktionsmaschine PM kontinuierlich dem definierten Zustand Z entsprechende Daten und/oder Prüfungsergebnisse an IF-Anom geschickt. Die Antwort von IF-Anom enthält dann eine Einordnung des Zustandes Z in "normal/nicht-normal", optional mit Konfidenzschätzung, und wird über ein drittes Modul IF-Anom Annotationsmanager zur Überprüfung an einen menschlichen Experten Expert geschickt.

In welchem Ausmaß die Vorschläge von IF-Anom tatsächlich durch einen Menschen Expert überprüft werden, ist sowohl abhängig vom Anwendungsfall als auch davon, wie weit das Training von IF-Anom fortgeschritten ist, das heißt wie hoch die erwartbaren Genauigkeiten der Einschätzungen von IF-Anom sind.

Als zusätzliches optionales viertes Modul IF-Anom Daten umfasst das Anomalieerkennungsmodul IF-Anom die Möglichkeit, weitere Datenquellen in einen Produktionsschritt PS zu integrieren. Das kann zum Beispiel ein zusätzlicher Vibrationssensor gekoppelt an eine spezielle Anregung sein. Die so erzeugten Daten können im Betrieb an das Anomalieerkennungsmodul IF-Anom übermittelt werden und dienen, sobald eine ausreichende Menge an Daten erzeugt wurde, als weitere Datenquelle für das Modelltraining.

Das Modelltraining kann beispielsweise durch folgendes Verfahren, das beispielsweise computerimplementiert ist, durchgeführt werden:
- Erhalten von Daten Data1, Data2 von Zuständen Z eines Prozesses, eines Bauteils und/oder einer Produktionsmaschine PM in wenigstens einem zu überwachenden Prozessschritt PS, PS1, PS2, PS3 eines industriellen Fertigungsprozesses IF zu einem vorgegebenen Zeitpunkt oder in einem vorgegebenen Zeitintervall, aus gleichartigen Prozessschritten und/oder aus nachgelagerten Prozessen umfassend sensoriell gemessene Daten und/oder aus Simulieren des Prozesses erhaltene Daten;
- Bestimmen einer Zustandsdefinition basierend auf den Daten Data1, Data2;
- Speichern der Daten und der Zustandsdefinition;
- Trainieren wenigstens eines Maschinenlernmodells ISA2 zur Anomalieerkennung, wobei die Daten Data1, Data2 in das Maschinenlernmodell ISA2 gespeist werden und das Maschinenlernmodell ISA2 basierend auf der Zustandsdefinition eine Verteilung der Zustände Z bestimmt und basierend auf der Verteilung die Zustände Z, die basierend auf den Daten Data1, Data2 selten sind und/oder von anderen Zuständen Z abweichen, als Anomalien klassifiziert;
- Bewerten des trainierten Maschinenlernmodells, wobei eine Überprüfungsinstanz Expert Wahr-Positive-Ergebnisse und/oder Falsch-Positive-Ergebnisse unter den klassifizierten Anomalien annotiert;
- Erweitern der Daten Data1, Data2 mit den Annotationen und Speichern der erweiterten Daten;
- Speichern des trainierten Maschinenlernmodells ISA2 und dessen Bewertung.

Das in Fig. 2 dargestellte Szenario 1 könnte beispielsweise den Fall einer kaputt-gehenden Produktionsmaschine PM betreffen. Im bekannten Stand der Technik wird in einem solchen Fall erst eine Reparatur durchgeführt, nachdem die Produktionsmaschine PM ausgefallen ist und damit Kosten für einen Fertigungsstillstand entstanden sind. Falls die Produktionsmaschine PM nicht sofort ausfällt, kann es trotzdem zur unbemerkten Produktion fehlerhafter Bauteile kommen, die weiterverarbeitet werden und dann zu Problemen in nachgelagerten Produktionsschritten PS, PS1, PS2, PS3 oder Produkten führen können.

In Fig. 2 bietet die Durchdringung des industriellen Fertigungsprozesses IF und/oder der Prüfungen mit Sensoren S und die entsprechende Verfügbarkeit von Daten Data2 die Möglichkeit, dem intelligenten Anomalieerkennungsmodul IF-Anom und/oder dessen jeweiligen Modulen IF-Anom Core, IF-Anom Anomalieerkenner, IF-Anom Annotationsmanager mittels künstlicher Intelligenz AI den Zustand Z eines Produktionsschrittes PS, PS1, PS2, PS3 oder eine Prüfung datenbasiert zu erfassen und in der Folge anormales Verhalten zu detektieren und zu melden. Das ermöglicht, zum einen eine frühzeitige Reaktion auf auftretende Veränderungen, im Idealfall, bevor ein Prozess zum Erliegen kommt oder ein fehlerhaftes Bauteil die Prozesskette weiterläuft, und zum anderen eine bessere Identifikation des zugrundeliegenden Fehlers.

In Fig. 2 überwacht das Anomalieerkennungsmodul IF-Anom beispielsweise einen Produktionsschritt PS oder eine Produktionsmaschine PM. Das könnte beispielsweise eine Drehmaschine sein, die ein Bauteil bearbeitet oder auch das Verschrauben eines Bauteils durch einen Menschen. Der Ablauf der Anwendung des Anomalieerkennungsmoduls IF-Anom gestaltet sich beispielsweise wie folgt:
Nachdem der zu überwachende Prozessschritt festgelegt ist, wird die infrage kommende Datenbasis Data 2 begutachtet. Basierend darauf wird eine datenbasierte Definition des zu überwachenden Zustandes Z festgelegt. Dann werden die initialen Trainingsdaten Data1 für das Anomalieerkennungsmodul IF-Anom ausgewählt.

Die Hauptdatenquelle der Trainingsdaten Data1 besteht regelmäßig aus historischen Daten des betreffenden Prozesses sowie der vorgelagerten Prozesse, soweit diese für die Beurteilung des Zustandes Z relevant sind. Das können zum Beispiel Geometrieinformation von involvierten Bauteilen sein. Daneben, beispielsweise weil für den zu überwachenden Prozess keine ausreichenden Daten zur Verfügung stehen, können Daten vergleichbarer Prozesse als zweite Datenquelle der Trainingsdaten Data1 herangezogen werden. Als dritte Datenquellen der Trainingsdaten können in einigen Fällen synthetische, simulierte Daten verwendet werden. Dabei werden Daten, beispielsweise über ein physikalisches Modell des fraglichen Prozesses, künstlich erzeugtsimuliert.

Betreffend die zweite und dritte Datenquelle der Trainingsdaten Data1 kann beispielsweise ein Transfer Learning zum Einsatz kommen. Die Verarbeitung der Daten Data1, Data2 sowie das Modelltraining werden von dem ersten Modul IF-Anom Core übernommen.

Während des Betriebes des Anomalieerkennungsmoduls IF-Anom werden kontinuierlich Daten Data2 vom überwachten Prozess an das zweite Modul IF-Anom Anomalieerkenner gesendet. Das zweite Modul IF-Anom Anomalieerkenner erhält von dem ersten Modul IF-Anom Core die aktuellen Modelle, sowie eine Anwendungsfallspezifische Konfiguration Konfig-Model, in der zum Beispiel die notwendige Vorverarbeitung der ankommenden Daten Data2 spezifiziert wird. Unter Verwendung dieser Modelle wird dann eine Beurteilung des aktuellen Zustandes Z durch das zweite Modul IF-Anom Anomalieerkenner vorgenommen.

Diese Beurteilung wird an das dritte Modul IF-Anom Annotationsmanager weitergegeben. Das dritte Modul IF-Anom Annotationsmanager übernimmt die Aufgabe zu entscheiden, ob und wann ein Zustand Z zur Beurteilung an einen, oder an welchen, menschlichen Experten Expert gegeben wird. Grob gesagt werden erkannte Anomalien beispielsweise fast immer weitergegeben und zusätzlich als normal erkannte Beispiele unter gewissen Umständen. Die Bewertungen durch den/die menschlichen Experten Expert gehen zurück an das dritte Modul IF-Anom Annotationsmanager, das entscheidet, in welcher Form Annotationen zurück an das erste Modul IF-Anom Core gehen, um dort die Datenbasis entsprechend zu erweitern. Im Idealfall stehen dem dritten Modul IF-Anom Annotationsmanager dabei Metainformation bezüglich der Beurteilung zur Verfügung, zum Beispiel eine, insbesondere wenn aus Datenschutzgründen notwendige, anonymisierte Identifikation des Beurteilenden Expert sowie ein Zeitstempel, wann die Beurteilung verfasst wurde. Details des dritten Moduls IF-Anom Annotationsmanager werden nachfolgend beschrieben.

Zum Aufbau einer erweiterten Datenbasis werden die an das zweite Modul IF-Anom Anomalieerkenner gesendeten Daten von diesem zu Verarbeitung und Datenspeicherung an das erste Modul IF-Anom Core Modul weitergegeben. Das erste Modul IF-Anom Core übernimmt das regelmäßig neu- oder nachtrainieren von Maschinenlernmodellen ISA2. Zu diesem Zweck hat das erste Modul IF-Anom Core auch die Möglichkeit, Annotationsanfragen an das dritte Modul IF-Anom Annotationsmanager zu senden.

Wird eine vorhergesagte Anomalie vom Überprüfer Expert als Anomalie bestätigt oder wird die erkannte Anomalie ohne Überprüfung freigegeben, werden beispielsweise zwei Reaktionen in Gang gesetzt. Zum einen wird der überwachte Produktionsschritt PS basierend auf dem als anormal erkannten Zustand Z näher begutachtet, um zu entscheiden, ob/wann eine Wartung/Reparatur durchgeführt werden muss. Zum anderen können die Bauteile, die während und nach dem Auftreten der Anomalie verarbeitet wurden, vorsorglich aussortiert und/oder gesondert begutachtet werden.

Eine beispielhafte Anwendung des vierten Moduls IF-Anom Daten zur zusätzlichen Datenerzeugung in diesem Szenario ist ein speziell entworfenes Testprogramm, das Maschinenzustände erzeugt, die unter Standardproduktionsbedingungen nicht vorkommen, aber ein hohes Maß an Informationen über den Gesundheitszustand der Komponenten der zu überwachenden Produktionsmaschine PM enthalten.

Beispielsweise werden hochfrequente Zeitsignale oft mittels Fast-Fourier Transformation oder Wavelet-Transformation in den Frequenzraum transformiert. Bei Zeitsignalen im Allgemeinen kann es notwendig sein, diese vor der Verarbeitung zu synchronisieren, um die Vergleichbarkeit sicherzustellen. Eine grundlegend andere Datenquelle mit wiederum spezifischen Verarbeitungsschritten stellen Bilddaten dar. Diese Schritte sind in hohem Maße abhängig von der jeweiligen Anwendung, die hier beschriebenen Grundprinzipen des Anomalieerkennungsmoduls IF-Anom bleiben aber davon unberührt.

Zunächst wird das Zeitsignal mittels einer Fast-Fourier Transformation in ein Sonagramm Sona umgewandelt. Innerhalb dieses Sonagramms Sona können Bereiche bestimmten Getriebebauteilen zugeordnet und mit Grenzwerten versehen werden, die nicht überschritten werden dürfen. Basierend auf diesen Bereichen, sogenannten Merkmalen, und den zugehörigen Grenzwerten wird der Zustand Z eines Getriebes G als In-Ordnung festgestellt, wenn kein Grenzwert überschritten wird, und als Nicht-in-Ordnung, wenn mindestens ein Grenzwert überschritten wird.

In einem Sonagramm Sona entspricht ein Eintrag der Amplitude oder Energie einer Frequenz in einem Zeitintervall, das heißt es ergibt sich eine Matrix von numerischen Werten W, bei der jede Spalte einem Zeitintervall und jede Zeile eine Frequenz entspricht. Die Einträge eines Sonagramms Sona sind damit geordnet.

Die Festlegung der Merkmale und der zugehörigen Grenzen ist ein komplexer Prozess, der zum einen aus dem Aufbau des Getriebes G resultiert und zum anderen aus Erfahrungen während des Einsatzes. Daraus resultiert, dass es immer auch auffällige Getriebe G gibt, die nicht erkannt werden. Aus diesem Grund wird die etablierte Getriebe-Akustikprüfung durch eine Anomalieerkennung mittels des Anomalieerkennungsmoduls IF-Anom erweitert.

Ein Modell, das zur Abbildung der in den Trainingsdaten üblicherweise beobachteten Zustände Z einen Autoencoder verwendet. Ein Autoencoder ist ein Modell mit einer zweigeteilten neuronalen Netzwerk Architektur. Ein Teil des Modells lernt eine niedrig dimensionale Repräsentation eines Zustandes, beispielsweise ein Sonagramm Sona zu erzeugen, und der zweite Teil des Modells lernt aus dieser den Ursprungszustand wiederherzustellen. Der Fehler, der dabei gemacht wird, ist für selten vorkommende Zustände größer als für die Mehrheit der vorkommenden Zustände Z. Dadurch kann dieses Modell zu Anomalieerkennung eingesetzt werden.

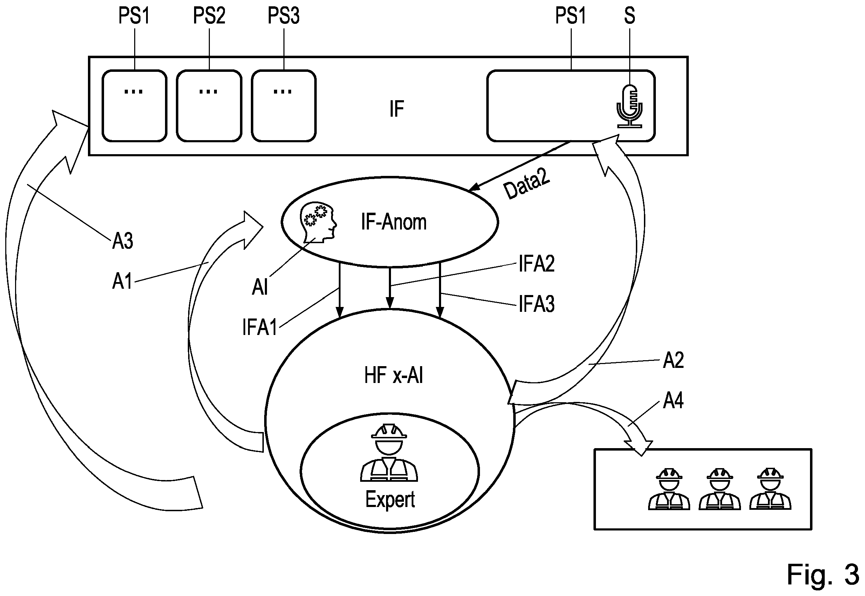

Fig. 3 zeigt das Zusammenspiel des Anomalieerkennungsmoduls IF-Anom mit dem erfindungsgemäßen System HF x-Al. Im Betrieb von HF x-Al erfolgt ein Austausch von Daten zwischen dem Anomalieerkennungsmodul IF-Anom und HF x-Al. Die für die Anomalieerkennung relevanten Daten, das sind die hochfrequent abgetasteten Sensordaten Data2 eines Prozessschrittes PS oder aus einer Produktprüfung, beispielsweise Vibrationsmessungen einer Maschinen- oder Produktkomponente, sowie für die Anomalieerkennung relevante Metadaten, beispielsweise Materialnummer, Maschinenparameter, werden über eine entsprechend implementierte Schnittstelle vom jeweiligen Prozessschritt PS an das Anomalieerkennungsmodul IF-Anom gegeben. Basierend auf diesen Daten erzeugt IF-Anom eine Einordnung in Klassen. Dabei werden mindestens die Klassen normal/nicht-normal betrachtet, aber auch ein höherer Detailgrad, beispielsweise eine Einordnung in verschiedene Arten von Anomalien, ist möglich.

Das erfindungsgemäße System HF x-Al erfüllt die Aufgabe, die durchgeführte Vorhersage nachvollziehbar zu machen. Dazu schickt das Anomalieerkennungsmodul IF-Anom die von ihm verarbeiteten Daten IFA1, das verwendete Al-Modell ISA2 sowie das Ergebnis der Einordnung, beispielsweise eine vorhergesagte Anomalie ISA3, an HF x-Al. HF x-Al errechnet daraus eine Erklärungsausgabe EA, die das Ergebnis der Anomalieerkennung für einen Menschen Expert nachvollziehbar macht. Die Erklärungsausgabe EA ist dabei häufig visueller Natur, beschränkt sich aber nicht darauf. Die Erklärungsausgabe wird dann zusätzlich zum Ergebnis der Anomalieerkennung an einen menschlichen Überprüfer Expert gesendet, der das Ergebnis der Anomalieerkennung validiert, um dann entsprechende Schritte einzuleiten.

Wird eine erkannte Anomalie bestätigt kann beispielsweise die Produktion gestoppt werden, möglicherweise fehlerhafte Teile können aussortiert werden und basierend auf einer als Verfahrensschritt A3 gezeigten Root-Cause-Analyse kann der grundlegende Fehler abgestellt werden. Wird die erkannte Anomalie als eine Falschvorhersage eingeordnet, können in dem Verfahrensschritt A1 die Ergebnisse der Bewertung in eine Verbesserung des Maschinenlernmodells ISA3 einfließen. Im Verfahrensschritt A2 fließt die Bewertung in eine Verbesserung der Datenaufnahme ein. Beispielsweise können durch die Bewertung Daten mit einer höheren Frequenz abgetastet werden. Im Verfahrensschritt A4 wird das Vertrauen der menschlichen Mitarbeitet in das System HF x-Al und/oder das Anomalieerkennungsmodul IF-Anom aufgebaut, beispielsweise in einem prototypischen Betrieb der Anomalieerkennung, indem gezeigt wird, dass die Anomalie-Vorhersagen auf relevanten Aspekten der Daten basieren.

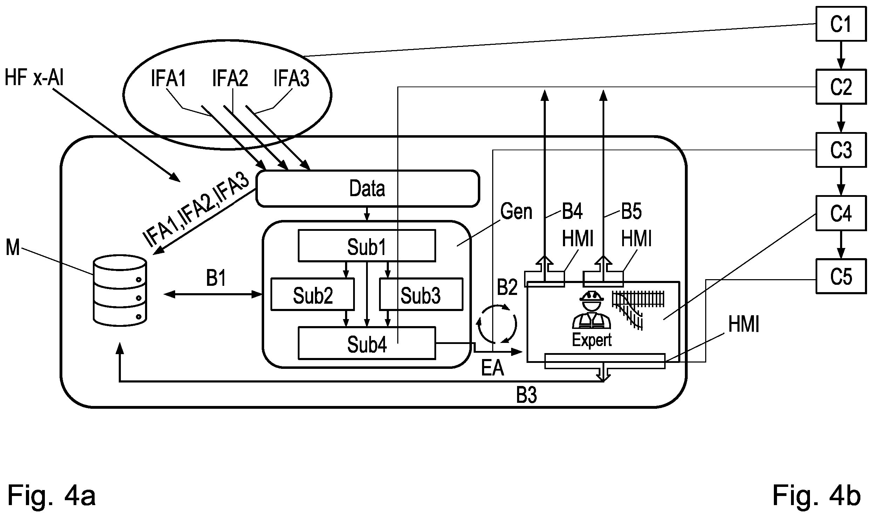

Fig. 4a zeigt das System HF x-Al. Die vom Anomalieerkennungsmodul IF-Anom an das System HF x-Al gesendeten Daten ISA1, ISA2, ISA3 gelangen zunächst in ein Dateneingabemodul Data. Dort wird die Gültigkeit der Daten ISA1, ISA2, ISA3 beispielsweise bezüglich Datentyp, überprüft. Basierend auf dieser Prüfung werden die Daten an dieser Stelle bereits soweit möglich korrigiert oder es wird eine Rückmeldung an einen Operator ausgelöst, in der die Problematik dargestellt wird und die weitere Verarbeitung wird bis zu der geforderten Berichtigung pausiert.

Dann werden die Daten ISA1, ISA2, ISA3 zu einem Speichermodul Mem gesendet und an den Erklärungsgenerator Gen, die zentrale Instanz zur Erzeugung der Erklärungsausgabe EA. Der Erklärungsgenerator Gen besteht beispielsweise aus vier Submodulen Sub1-Sub4., die im Folgenden kurz und in den nächsten Abschnitten ausführlicher beschrieben werden. Eines der Module Sub1 dient der Berechnung der Erklärung, ein weiteres Sub4 zur Erzeugung der für einen Menschen Expert verarbeitbaren Erklärungsausgabe EA und zwei weitere Module Sub2, Sub3 dienen der Erweiterung der berechneten Erklärung. Die berechnete Erklärungsausgabe EA wird an das Speichermodul Mem gesendet und dort zu den Eingangsdaten ISA1, ISA2, ISA3 hinzugefügt.

Die aufbereitete Erklärungsausgabe EA wird an einen menschlichen Bewerter Expert gesendet. Der Bewerter Expert verfügt über das nötige Expertenwissen, um eine hochwertige Einordnung der potenziellen Anomalie zu gewährleisten. Der Bewerter Expert nutzt die Erklärungsausgabe EA, um nachzuvollziehen, ob die Einordung des Anomalieerkennungsmoduls IF-Anom korrekt war oder nicht. Um eine hochwertige Erklärung zu gewährleisten, kann der Bewerter Expert in einem iterativen Verfahren durch Einstellen verschiedener Parameter, siehe Verfahrensschritt B2, die Erklärungsberechnung manuell verfeinern. Die finale Einordnung der potenziellen Anomalie wird in eine Mensch-Maschinen-Schnittstelle HMI eingegeben und im Verfahrensschritt B3 an das Speichermodul Mem gesendet, sodass dort ein kompletter Datensatz bezüglich der Anomalie und seiner Bewertung vorliegt. Die Parameter, die für die finale Erklärung verwendet wurden, werden vom Erklärungsgenerator Gen gespeichert und als Standard für zukünftige Erklärungen genutzt. Basierend auf der Einordnung des Experten werden im Falle einer bestätigten Anomalie Maßnahmen den Produktionsprozess betreffend umgesetzt.

Im Verfahrensschritt B4 wird die Bewertung des Bewerters Expert, insbesondere dessen Einordnung, an die Al-Modelle zurückgespeist zum Verbessern dieser. Im Verfahrensschritt B5 wird die Einordnung des Bewerters Expert in entsprechende Prozesse des industriellen Fertigungsprozesses IF zurückgespeist zum verbesserten Umgang mit Anomalien. Im Verfahrensschritt B1 erfolgt ein Datenaustausch zwischen dem Erklärungsgenerator Gen und dem Speichermodul Mem, beispielsweise für eine Ähnlichkeitsberechnung basierend auf einem Vergleich einer aktuell vorhergesagten Anomalie IFA3 mit in dem Speichermodul Mem gespeicherten historischen vorhergesagten Anomalien IFA3 und den jeweils zugehörigen Daten.

In dem in Fig. 4b gezeigten Verfahrensschritt C1 werden die von dem Anomalieerkennungsmodul IF-Anom der Fig. 4a verarbeiteten Sensordaten IFA1, auf denen das von dem Anomalieerkennungsmodul IF-Anom ausgeführte Maschinenlernmodell IFA2 eine Anomalie vorhergesagt hat, das Maschinenlernmodell IFA2 und die vorhergesagte Anomalie IFA3 erhalten. In dem Verfahrensschritt C2 wird die Erklärungsausgabe EA für die vorhergesagte Anomalie IFA3 erzeugt. In dem Verfahrensschritt C3 wird die Erklärungsausgabe EA an den menschlichen Bewerter Expert gesendet. In dem Verfahrensschritt C4 erfolgt ein menschliches Bewerten der vorhergesagten Anomalie IFA3 in eine richtig oder falsch vorhergesagte Anomalie IFA3 basierend auf der Erklärungsausgabe EA. In einem Verfahrensschritt C5 wird die Bewertung an das System HF x-AI, das Anomalieerkennungsmodul IF-Anom und/oder an einen jeweils betroffenen Produktionsschritt PS des industriellen Fertigungsprozesses IF mittels einer Mensch-Maschinen-Schnittstelle HMI gesendet.

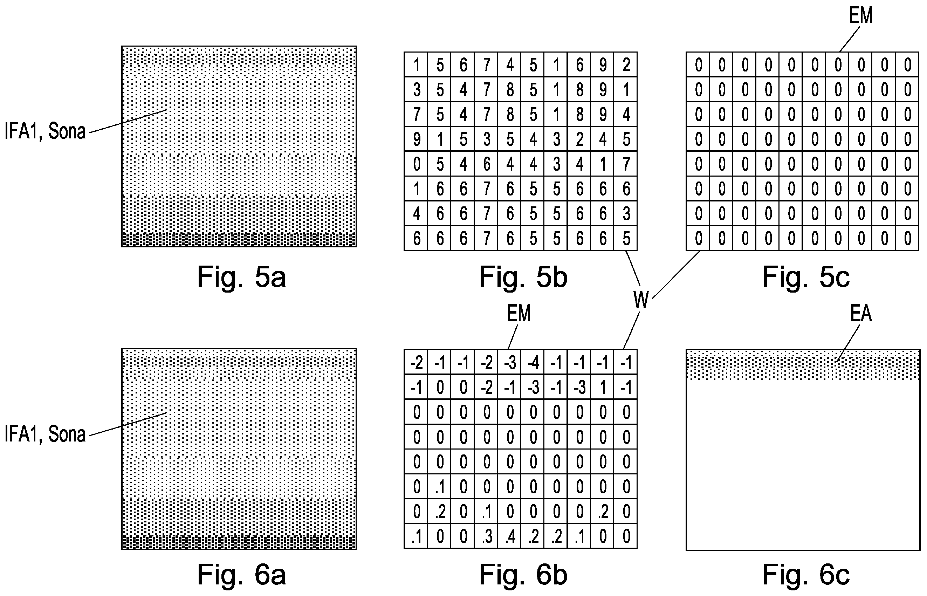

Fig. 5a-Fig. 5c zeigen ein Beispiel für eine Berechnung der Erklärungsausgabe EA. Die von dem Anomalieerkennungsmodul IF-Anom verarbeiteten Daten IFA1 liegen in Fig. 5a in Form eines Sonagramms Sona vor. Fig. 5b zeigt in reduzierter Darstellung, dass das Sonagramm Sona eine Matrix von Zeit-/Frequenz-Werten W ist. Fig. 5c zeigt eine Erklärungsmaske EM, die dieselbe Dimension hat wie das Sonagramm Sona der Fig. 5a, 5b und die beispielsweise mit Nullen initialisiert wird.

Fig. 6b zeigt eine optimierte Erklärungsmaske EM, die die Erklärung des in Fig. 6a gezeigten nicht-normalen Sonagramms Sona bildet. Das Sonagramm Sona der Fig. 6a wurde von dem Anomalieerkennungsmodul IF-Anom als nicht-normal klassifiziert. Ausgehend von der Initialisierung, siehe beispielsweise Fig. 5c, verändert das Auswertemodul Gen des Systems HF x-Al die Erklärungsmaske EM iterativ derart, dass die Erklärungsmaske EM ein anfangs nicht-normales Sonagramm Sona in ein normales Sonagramm Sona umwandelt. In dem gezeigten Beispiel müssen vor allem im oberen Bereich des Sonagramms Sona der Fig. 6a Werte W verringert werden. Fig. 6c zeigt die Erklärungsausgabe EA, nämlich die visuelle Darstellung der optimierten Erklärungsmaske der Fig. 6b.

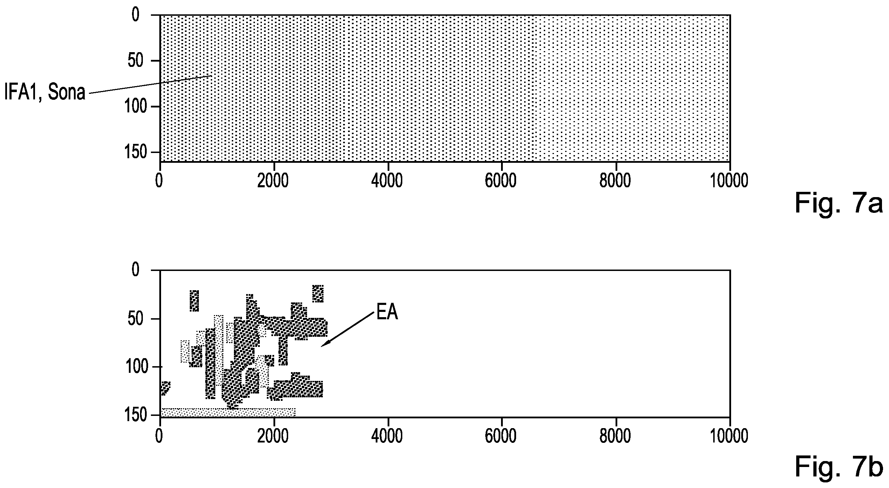

Fig. 7a zeigt ein Beispiel eines von dem Anomalieerkennungsmodul If-Anom als nicht-normal klassifizierten Sonagramms Sona bei der End-of-Line EOL Akustikprüfung eines Getriebes G. Fig. 7b zeigt die durch das System HF x-Al berechnete Erklärungsausgabe EA. Dunkle Bereiche entsprechen negativen Werten in der Erklärungsmaske EM. Helle Bereiche entsprechen positiven Werten in der Erklärungsmaske EM.

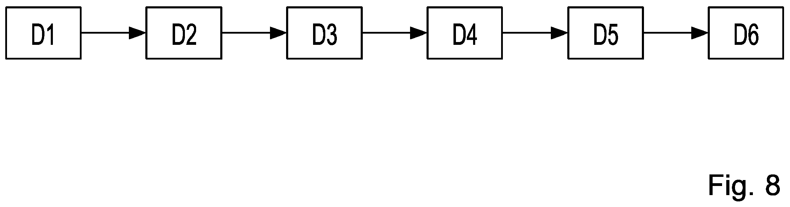

Der einwandfreie Zustand eines fertigen Getriebes G wird im Rahmen der End-of-Line EOL Prüfung festgestellt. Diese Prüfung beinhaltet beispielsweise eine Funktions- und/oder Akustikprüfung. Im Rahmen der Akustikprüfung wird in verschiedenen Gängen eine Drehzahlrampe gefahren und währenddessen wird der entstehende Körperschall am Getriebegehäuse gemessen. Dies entspricht dem Verfahrensschritt D1 in Fig. 8.

Die etablierte Beurteilung des Getriebezustandes geschieht dann durch Umrechnen des Beschleunigung/Zeit-Signals in den Frequenzraum mittels Fast-Fourier-Transformation, siehe Verfahrensschritt D2 in Fig. 8, und anschließender Anwendung von Grenzwerten auf Bestimmte Zeit/Frequenz-Bereiche. Das Resultat dieser Prüfung ist dann eine Einordung in In-Ordnung und Nicht-In-Ordnung. Dies entspricht dem Verfahrensschritt D3 in Fig. 8. Da die etablierte Getriebe-Geräuschprüfungs-Auswertung nicht alle Nicht-In-Ordnung-Getriebe erfassen kann, wird in dem in Fig. 8 gezeigten Verfahrensschritt D4 eine Al-basierte Anomalieerkennung auf den als In-Ordnung klassifizierten Getriebeprüfungen durchgeführt. Zur Erkennung von Anomalien werden dabei beispielsweise Algorithmen basierend auf Convolutional Neuronal Networks CNN verwendet, deren Ergebnisse IFA3 von Bewertern Expert überprüfen werden.

Das CNN arbeitet dabei auf den Sonagrammen Sona der Getriebe-Geräuschprüfungen und resultiert in einer Einordnung der Sonagramme Sona in die Klassen normal/nicht-normal. Wird ein als In-Ordnung getestetes Getriebe G durch das CNN als nicht-normal klassifiziert, kann diese Klassifikation durch einen menschlichen Bewerter Expert überprüft werden. Damit diese Überprüfung gezielt ablaufen kann, wird HF x-Al eingesetzt, um dem Überprüfer Expert Bereiche des Sonagramms Sona aufzuzeigen, die für die Klassifikation als Anomalie relevant waren. Dies entspricht dem in Fig. 8 gezeigten Verfahrensschritt D5.

In diesem Anwendungsfall wird die Erklärungsmaske EM auf das Ursprungssonagramm Sona addiert und unter den folgenden Randbedingungen so angepasst, dass die Summe aus ursprünglichem Sonagramm Sona und Erklärungsmaske EM durch das verwendete CNN nicht mehr als nicht-normal klassifiziert wird. Die Optimierung geschieht beispielsweise mittels des Verfahrens Gradienten-Abstieg. Die verwendeten Randbedingungen sind:
- Die Summe über die Beträge/Absolutwerte aller Werte W der Erklärungsmaske EM soll möglichst klein sein. So wird erreicht, dass die Erklärungsmaske sparsam mit Änderungen umgeht und sich spezifisch auf die wirklich relevanten Bereiche der Anomalie-Einordnung konzentriert.
- Die Änderungen zwischen benachbarten Werten W der Erklärungsmaske EM sollen möglichst gering sein. Damit wird erreicht, dass die Erklärungsmaske EM zusammenhängende Bereiche favorisiert und somit eine für einen Menschen Expert besser interpretierbare Darstellung erzeugt.
- Die durch die Erklärungsmaske EM induzierten Änderungen werden beschränkt. Das heißt die Summe aus ursprünglichem Sonagramm Sona und Erklärungsmaske EM darf, auf Ebene jedes einzelnen Wertes W, bestimmte Werte nicht über- oder unterschreiten. Damit wird verhindert, dass der Lösungsalgorithmus Erklärungsmasken EM erzeugt, die zu unrealistischen Sonagrammen Sona führen. Das Ziel ist hier, dass die Erklärungsmaske EM die nicht-normalen Strukturen im Sonagramm Sona entfernt/entdeckt, ohne dabei allzu unrealistische Sonagramme Sona zu erzeugen.
- Weitere Terme dieser Art in der Optimierung können sinnvoll sein und müssen abhängig vom genauen Einsatzszenario entworfen werden.

In dem in Fig. 8 gezeigten Verfahrensschritt D6 werden dann basierend auf der Erklärungsausgabe EA einem menschlichen Bewerter Expert die Bereiche des Sonagramms Sona angezeigt, die für die vorhergesagte Anomalie IFA3 verantwortlich sind.

### Bezugszeichen

- IF: industrieller Fertigungsprozess
- PS1-PS3: Produktionsschritte
- PS: Produktionsschritt
- PM: Produktionsmaschine
- G: Getriebe
- EOL: End Of Line Prüfung
- S: Sensor

- HF x-Al: System
- EA: Erklärungsausgabe
- EM: Erklärungsmaske
- HMI: Mensch-Maschinen-Schnittstelle

- IF-Anom: Anomalieerkennungsmodul
- IF-Anom Core: erstes Modul
- IF-Anom Anomalieerkenner: zweites Modul
- IF-Anom Annotationsmanager: drittes Modul
- IF-Anom Daten: viertes Modul
- Expert Überwacher/menschlicher: Bewerter

- IFA1: vom Anomalieerkennungsmodul verarbeitete Sensordaten
- IFA2: Maschinenlernmodell
- IFA3: vorhergesagte Anomalie

- Data1: erste Daten
- Data2: hochfrequenten Sensordaten
- Data3: dritte Daten
- Sona: Sonagramm
- Data: Dateneingabemodul

- Gen: Auswertemodul/Erklärungsgenerator
- Sub1: erstes Submodul für Erklärungsberechnung
- Sub2: zweites Submodul für Ähnlichkeitsberechnung
- Sub3: drittes Submodul für Erklärungskonvertierung
- Sub4: viertes Submodul für eine Aufbereitung der Erklärungsausgabe
- Mem: Speichermodul

- Z: Zustand
- Konfig-Model: Konfiguration trainierter Modelle

- AI: Künstliche Intelligenz
- CNN: Convolutional Neuronal Network

- A1-A4: Verfahrensschritte
- B1-B4: Verfahrensschritte
- C1-C5: Verfahrensschritte
- D1-D6: Verfahrensschritte

## Patentansprüche

1. System (HF x-AI) zum Erzeugen einer von einem Menschen (Expert) wahrnehmbaren Erklärungsausgabe (EA) für eine von einem Anomalieerkennungsmodul (IF-Anom) vorhergesagten Anomalie (IFA3) auf hochfrequenten Sensordaten (Data2) oder davon abgeleiteten Größen eines industriellen Fertigungsprozesses (IF),
wobei es sich bei den hochfrequenten Daten um Daten handelt, welche mit einer hohen Abtastrate oberhalb von 9 kHz mittels realer Sensoren aufgenommen wurden,
wobei es sich bei den realen Sensoren um Temperatursensoren, Vibrationssensoren, Kraftsensoren, Drucksensoren, Optiksensoren und/oder Sensoren zur Messung der Größe eines Bauteils handelt,
wobei das Anomalieerkennungsmodul (IF-Anom) die Anomalie vorhersagt, wenn das Anomalieerkennungsmodul (IF-Anom) die hochfrequenten Daten (Data2) oder Bereiche der hochfrequenten Daten (Data2), die einen Zustand (Z) einer Maschine (PM), eines Bauteils und/oder eines Produktes (G) des Fertigungsprozesses (IF) beschreiben, als abweichend von normal zu erwarteten beobachtbaren Daten klassifiziert,
wobei der industrielle Fertigungsprozess (IF) in eine Produktionshauptlinie und Produktionsnebenlinien gegliedert ist, die Produktionslinien in einzelne aufeinander aufbauende Produktionsschritte (PS, PS1- PS3) unterteilt sind und am Ende der Produktionshauptlinie eine End-of-Line Prüfung (EOL) eines Getriebes erfolgt, wobei das System (HE x-AI) ein verteiltes System ist, das die Sensoren und eine Cloud-Infrastruktur umfasst, wobei im System zumindest die Sensoren lokal an Produktionsschritten (PS, PS1-PS3) des industriellen Fertigungsprozesses (IF) angeordnet sind und zumindest die Berechnung der Erklärungsausgabe (EA) in der Cloud-Infrastruktur ausgeführt wird,
und wobei das System (HF x-AI) konfiguriert ist,
• basierend auf von dem Anomalieerkennungsmodul (IF-Anom) verarbeiteten hochfrequenten Daten (IFA1, Data2) oder Bereichen der hochfrequenten Daten (IFA1, Data2), einem Maschinenlernmodell (IFA2), das das Anomalieerkennungsmodul (IF-Anom) auf den hochfrequenten Daten (IFA1, Data2) oder Bereichen der hochfrequenten Daten (IFA1, Data2) ausführt, und der mittels des Maschinenlernmodells (IFA2) vorhergesagten Anomalie (IFA3) eine Erklärung für die vorhergesagte Anomalie (IFA3) zu berechnen;
• zur Erklärungsberechnung eine Erklärungsmaske (EM) zu bestimmen, die die hochfrequenten Daten (IFA1, Data2) oder Bereiche der hochfrequenten Daten (IFA1, Data2), auf denen die Anomalie (IFA3) vorhergesagt wurde, derart verändert, dass das Anomalieerkennungsmodul (IF-Anom) die mit der Erklärungsmaske (EM) maskierten Sensordaten als normal klassifiziert;
• Werte (W) der Erklärungsmaske (EM) durch iteratives Prozessieren des Maschinenlernmodells (IFA2) auf den jeweils maskierten hochfrequenten Daten (IFA1, Data2) zu optimieren, wobei die optimierte Erklärungsmaske (EM) Bereiche der hochfrequenten Daten (Data2) oder davon abgeleiteten Größen präsentiert, die entscheidungsrelevant für die Erklärung einer Anomalieerkennung sind;
• die optimierte Erklärungsmaske (EM) für einen Menschen (Expert) visuell wahrnehmbar darzustellen, wobei das System (HF x-AI) die Präsentation der Erklärungsausgabe (EA) darauf richtet, die Wahrnehmung der entscheidungsrelevanten Bereiche durch den Menschen (Expert) in bestimmter Weise zu ermöglichen, zu verbessern oder zweckmäßig zu gestalten, und als die von dem Menschen (Expert) wahrnehmbare Erklärungsausgabe (EA) über eine Mensch MaschinenSchnittstelle des Systems (HE x-AI) an den Menschen (Expert) zu senden, wobei der Mensch (Expert) basierend auf der optimierten Erklärungsmaske (EM) erkennt, welche hochfrequenten Daten (IFA1, Data2), Bereiche der hochfrequenten Daten (IFA1, Data2) oder davon abgeleitete Größen für die von dem Anomalieerkennungsmodul (IF-Anom) vorhergesagt Anomalie (IFA3) verantwortlich sind.

2. System (HF x-AI) nach Anspruch 1, konfiguriert, die optimierte Erklärungsmaske (EM), eine Kombination aus initialen Sensordaten (IFA1) oder davon abgeleiteten Größen und der optimierten Erklärungsmaske (EM) oder eine Nebeneinanderdarstellung der initialen Sensordaten (IFA1) oder davon abgeleiteten Größen und der optimierten Erklärungsmaske (EM) für den Menschen (Expert) visuell wahrnehmbar darzustellen.

3. System (HF x-AI) nach Anspruch 2, konfiguriert, die Werte (W) der Erklärungsmaske (EM) unter der oder den Randbedingungen so zu optimieren, dass
• die Veränderung der initialen Sensordaten (IFA1) oder davon abgeleiteter Größen minimal ist;
• die Veränderung der initialen Sensordaten (IFA1) oder davon abgeleiteter Größen auf lokalisierte Bereiche der Sensordaten fokussiert ist;
• die Veränderung der initialen Sensordaten (IFA1) oder davon abgeleiteter Größen zusammenhängende Bereiche der initialen Sensordaten oder davon abgeleiteter Größen gegenüber punktuellen Sensordaten favorisiert; und/oder
• die optimierten Werte (W) der Erklärungsmaske (EM) im Bereich erwartbarer beobachtbarer Werte oder physikalisch möglicher Werte liegen.

4. System (HF x-AI) nach Anspruch 3, konfiguriert, die initialen Sensordaten (IFA1) oder die davon abgeleiteten Größen und/oder die Erklärungsmaske (EM) mit Zufallswerten zu stören.

5. System (HF x-AI) nach einem der vorangehenden Ansprüche, wobei die Erklärungsmaske (EM) die gleiche Dimension hat wie die initialen Sensordaten (IFA1)) oder davon abgeleitete Größen und das System (HF x-AI) konfiguriert ist, die Erklärungsmaske (EM) auf initiale Sensordaten (IFA1) oder davon abgeleitete Größen iterativ zu addieren und/oder die Erklärungsmaske (EM) iterativ mit initialen Sensordaten (IFA1) oder davon abgeleitete Größen zu multiplizieren.

6. System (HF x-AI) nach einem der Ansprüche 1 bis 4, wobei die Erklärungsmaske (EM) initial eine niedrigere Dimension hat als initiale Sensordaten (IFA1) oder davon abgeleitete Größen und das System (HF x-AI) konfiguriert ist, mittels Upsampling eine Erklärungsmaske (EM) zu bestimmen, die die gleiche Dimension hat wie initiale Sensordaten (IFA1) oder davon abgeleitete Größen.

7. System (HF x-AI) nach einem der vorangehenden Ansprüche, umfassend
• ein Dateneingabemodul (Data), das die von dem Anomalieerkennungsmodul (IF-Anom) verarbeiteten Sensordaten (IFA1) oder Bereiche der Sensordaten, das Maschinenlernmodell (IFA2), das das Anomalieerkennungsmodul (IF-Anom) auf den Sensordaten (Data2) oder Bereichen der Sensordaten ausführt, und die mittels des Maschinenlernmodells (IFA2) vorhergesagte Anomalie (IFA3) erhält;
• ein Auswertemodul (Gen), das die von dem Dateneingabemodul (Data) erhaltenen Daten (IFA1, IFA3) und das erhaltenen Maschinenlernmodell (IFA2) erhält und basierend darauf die Erklärungsausgabe (EA) erzeugt, wobei das Auswertemodul (Gen) ein erstes Sendemodul, das die Erklärungsausgabe (EA) an den Menschen (Expert) sendet, umfasst;
• ein Speichermodul (Mem) umfassend ein Empfangsmodul, das eine von dem Menschen (Expert) basierend auf der Erklärungsausgabe (EA) vorgenommene Bewertung der vorhergesagten Anomalie (IFA3) als eine richtig oder falsch vorhergesagte Anomalie (IFA3) empfängt, wobei das Speichermodul (Data) die von dem Dateneingabemodul (Data) erhaltenen Daten (IFA1, IFA3) und das erhaltenen Maschinenlernmodell (IFA2), die von dem Auswertemodul (Gen) erzeugte Erklärungsausgabe (EA) und die von dem Empfangsmodul empfangene Bewertung empfängt und speichert;
• ein zweites Sendemodul, das die von dem Menschen (Expert) vorgenommene Bewertung der vorhergesagten Anomalie (IFA3) in eine richtig oder falsch vorhergesagte Anomalie (IFA3) an das Anomalieerkennungsmodul (IF-Anom) sendet zur Verbesserung des Maschinenlernmodells (IFA2).

8. System (HF x-AI) nach einem der vorangehenden Ansprüche, konfiguriert, bei der Erklärung einer aktuell vorhergesagten Anomalie (IFA3) Sensordaten oder Bereiche der Sensordaten für diese aktuelle Anomalie (IFA3) mit in einem Speichermodul (Mem) des Systems (HF x-AI) gespeicherten Sensordaten vorhergesagter Anomalien (IFA3) zu vergleichen, eine Erklärungsausgabe (EA) für diese aktuelle Anomalie (IFA3) mit in dem Speichermodul (Mem) gespeicherten Erklärungsausgaben (EA) vorhergesagter Anomalien (IFA3) zu vergleichen und/oder eine Kombination aus den Sensordaten und der Erklärungsausgabe (EA) jeweils für diese aktuelle Anomalie (IFA3) mit in dem Speichermodul (Mem) gespeicherten entsprechenden Kombinationen vorhergesagter Anomalien (IFA3) zu vergleichen, wobei das System (HF x-AI) konfiguriert ist, die Vergleiche durch Ausführen eines Algorithmus, in dem Abstandsmaße implementiert sind, zu bestimmen.

9. System (HF x-AI) nach einem der vorangehenden Ansprüche, konfiguriert, initiale Sensordaten (IFA1) in einem anderen Datenraum darzustellen und die Erklärungsausgabe (EA) in diesem Datenraum zu erzeugen.

10. System (HF x-AI) nach einem der vorangehenden Ansprüche, konfiguriert, für die Sensordaten, Bereiche der Sensordaten oder davon abgeleitete Größen, die für die von dem Anomalieerkennungsmodul vorhergesagte Anomalie (IFA3) verantwortlich sind, eine Abtastung mit einer erhöhten Frequenz einzuleiten.

11. Verwendung eines Systems (HF x-AI) nach einem der vorangehenden Ansprüche während einer Modellentwicklung eines Anomalieerkennungsmoduls (IF-Anom), wobei basierend auf einer Erklärungsausgabe (EA) des Systems (HF x-AI) in einem Trainingsprozess eines Maschinenlernmodells (IFA2), das von dem Anomalieerkennungsmodul (IF-Anom) ausgeführt wird, sichergestellt wird, dass keine falschen, zufälligen oder irrelevanten Aspekte von Trainingsdaten gelernt werden.

12. Verfahren zur Überwachung einer auf künstlicher Intelligenz (AI) basierenden Anomalieerkennung in hochfrequenten Sensordaten (Data2) oder davon abgeleiteten Größen eines industriellen Fertigungsprozesses (IF), das Verfahren umfassend die Schritte:
Erhalten von einem Anomalieerkennungsmodul (IF-Anom) verarbeiteten hochfrequenten Sensordaten (IFA1), auf denen ein von dem Anomalieerkennungsmodul (IF-Anom) ausgeführtes Maschinenlernmodell (IFA2) eine Anomalie vorhergesagt hat, Erhalten des Maschinenlernmodells (IFA2) und Erhalten der vorhergesagten Anomalie (IFA3) (C1); Erzeugen einer Erklärungsausgabe (EA) für die vorhergesagte Anomalie (IFA3) mittels eines Systems (HF x-AI) nach einem der Ansprüche 1 bis 10 (C2); Senden der Erklärungsausgabe (EA) an einen menschlichen Bewerter (Expert) (C3);
menschliches Bewerten der vorhergesagten Anomalie (IFA3) in eine richtig oder falsch vorhergesagte Anomalie (IFA3) basierend auf der Erklärungsausgabe (EA) (C4); Senden der Bewertung an ein System (HF x-AI) (B3), das Anomalieerkennungsmodul (IF-Anom) (E4) und/oder an einen jeweils betroffenen Produktionsschritt (PS) des industriellen Fertigungsprozesses (IF) (B5) mittels einer Mensch-Maschinen-Schnittstelle (HMI) (C5).

13. Verwendung eines Systems (HF x-AI) nach einem der Ansprüche 1 bis 10 zur Überwachung einer auf künstlicher Intelligenz (AI) basierenden Anomalieerkennung bei einer End-of-Line (EOL) Akustikprüfung eines Getriebes (G), umfassend die Schritte:
• Antreiben des Getriebes (G) mit einem Drehzahlprofil, Messen des entstehenden Körperschalls mittels Akustiksensoren (S) und Erhalten von Körperschall-Zeitreihen (DI);
• Transformieren der Körperschall-Zeitreihen in einen Frequenzraum und Erhalten von Sonagrammen (Sona) (D2);
• basierend auf vorgegebenen Grenzwerten für bestimmte Frequenz-Bereiche Klassifizieren der Sonagramme (Sona) in die Klassen normal und nicht-normal (D3);
• Prozessieren der Sonagramme (Sona) durch ein künstliches neuronales Netzwerk (AI, ISA2), das trainiert ist, auf den Sonagrammen (Sona) Anomalien vorherzusagen (D4);
• falls das künstliche neuronale Netzwerk (AI, ISA2) auf einem als normal klassifizierten Sonagrarnm (Sona) eine Anomalie vorhersagt, Erzeugen einer Erklärungsausgabe (EA) für die vorhergesagte Anomalie (ISA3) (D5);
• basierend auf der Erklärungsausgabe (EA) Anzeigen einem menschlichen Bewerten (Expert) der Bereiche des Sonagramms (Sona), die für die vorhergesagte Anomalie (IFA3) verantwortlich sind (D6).

14. Computerprogramm zur Überwachung einer auf künstlicher Intelligenz (AI) basierenden Anomalieerkennung in hochfrequenten Sensordaten (Data2) oder davon abgeleiteten Großen eines industriellen Fertigungsprozesses (IF), umfassend Befehle, die bewirken, dass ein Computer die Schritte des Verfahrens nach Anspruch 12 ausführt, wenn das Computerprogramm auf dem Computer läuft.

## Claims

1. System (HF x-AI) for generating an explanatory output (EA) perceivable by a human (expert) for an anomaly (IFA3) predicted by an anomaly detection module (IF-Anom) on high-frequency sensor data (Data2) or variables of an industrial production process (IF) derived therefrom,
wherein the high-frequency data are data which have been recorded at a high sampling rate above 9 kHz by means of real sensors,
wherein the real sensors are temperature sensors, vibration sensors, force sensors, pressure sensors, optical sensors and/or sensors for measuring the size of a component,
wherein the anomaly detection module (IF-Anom) predicts the anomaly if the anomaly detection module (IF-Anom) classifies the high-frequency data (Data2) or regions of the high-frequency data (Data2) describing a state (Z) of a machine (PM), a component and/or a product (G) of the production process (IF) as deviating from observable data to be expected normally,
wherein the industrial production process (IF) is divided into a main production line and secondary production lines, the production lines are divided into individual production steps (PS, PS1-PS3) building up on one another and an end-of-line check (EOL) of a transmission is carried out at the end of the main production line, wherein the system (HE x-AI) is a distributed system, comprising the sensors and a cloud infrastructure,
wherein in the system at least the sensors are arranged locally at production steps (PS, PS1-PS3) of the industrial production process (IF) and at least the calculation of the explanatory output (EA) is carried out in the cloud infrastructure,
and wherein the system (HF x-AI) is configured
• to calculate an explanation for the predicted anomaly (IFA3) on the basis of high-frequency data (IFA1, Data2) or regions of the high-frequency data (IFA1, Data2) processed by the anomaly detection module (IF-Anom), a machine learning model (IFA2) which the anomaly detection module (IF-Anom) executes on the high-frequency data (IFA1, Data2) or regions of the high-frequency data (IFA1, Data2), and the anomaly (IFA3) predicted by means of the machine learning model (IFA2);
• for calculating the explanation, to determine an explanatory mask (EM), which changes the high-frequency data (IFA1, Data2) or regions of the high-frequency data (IFA1, Data2) on which the anomaly (IFA3) was predicted such that the anomaly detection module (IF-Anom) classifies the sensor data masked with the explanatory mask (EM) as normal;
• to optimize values (W) of the explanatory mask (EM) by iteratively processing the machine learning model (IFA2) on the respectively masked high-frequency data (IFA1, Data2), wherein the optimized explanatory mask (EM) presents regions of the high-frequency data (Data2) or variables derived therefrom that are decision-relevant for the explanation of anomaly detection;
• to present the optimized explanatory mask (EM) visually perceptibly for a human (expert), wherein the system (HF x-AI) directs the presentation of the explanatory output (EA) to enable, improve or appropriately design the perception of the decision-relevant regions by the human (expert) in a certain manner, and to send it to the human (expert) as the explanatory output (EA) perceivable by the human (expert) via a human-machine interface of the system (HE x-AI), wherein the human (expert) recognizes, on the basis of the optimized explanatory mask (EM), which high-frequency data (IFA1, Data2), regions of the high-frequency data (IFA1, Data2) or variables derived therefrom are responsible for the anomaly (IFA3) predicted by the anomaly detection module (IF-Anom).

2. System (HF x-AI) according to Claim 1, configured to present the optimized explanatory mask (EM), a combination of initial sensor data (IFA1) or variables derived therefrom and the optimized explanatory mask (EM), or a side-by-side representation of the initial sensor data (IFA1) or variables derived therefrom and the optimized explanatory mask (EM) visually perceptibly for the human (expert).

3. System (HF x-AI) according to Claim 2, configured to optimize the values (W) of the explanatory mask (EM) under the boundary condition or conditions such that
• the change in the initial sensor data (IFA1) or variables derived therefrom is minimal;
• the change in the initial sensor data (IFA1) or variables derived therefrom is focused on localized regions of the sensor data;
• the change in the initial sensor data (IFA1) or variables derived therefrom favours contiguous regions of the initial sensor data or variables derived therefrom over punctiform sensor data; and/or
• the optimized values (W) of the explanatory mask (EM) lie in the range of observable values to be expected or physically possible values.

4. System (HF x-AI) according to Claim 3, configured to disturb the initial sensor data (IFA1) or the variables derived therefrom and/or the explanatory mask (EM) with random values.

5. System (HF x-AI) according to one of the preceding claims, wherein the explanatory mask (EM) has the same dimension as the initial sensor data (IFA1) or variables derived therefrom and the system (HF x-AI) is configured to add the explanatory mask (EM) iteratively to initial sensor data (IFA1) or variables derived therefrom and/or to multiply the explanatory mask (EM) iteratively with initial sensor data (IFA1) or variables derived therefrom.

6. System (HF x-AI) according to one of Claims 1 to 4, wherein the explanatory mask (EM) initially has a lower dimension than initial sensor data (IFA1) or variables derived therefrom, and the system (HF x-AI) is configured to determine by means of upsampling an explanatory mask (EM) which has the same dimension as initial sensor data (IFA1) or variables derived therefrom.

7. System (HF x-AI) according to one of the preceding claims, comprising
• a data input module (Data) that receives the sensor data (IFA1) or regions of the sensor data processed by the anomaly detection module (IF-Anom), the machine learning model (IFA2) that the anomaly detection module (IF-Anom) executes on the sensor data (Data2) or regions of the sensor data, and the anomaly (IFA3) predicted by means of the machine learning model (IFA2);
• an evaluation module (Gen) that obtains the data (IFA1, IFA3) obtained by the data input module (Data) and the obtained machine learning model (IFA2) and on the basis thereof generates the explanatory output (EA), wherein the evaluation module (Gen) comprises a first sending module that sends the explanatory output (EA) to the human (expert);
• a memory module (Mem) comprising a receiving module that receives an assessment of the predicted anomaly (IFA3), made by the human (expert) on the basis of the explanatory output (EA), as a correctly or incorrectly predicted anomaly (IFA3), wherein the memory module (Data) receives and stores the data (IFA1, IFA3) obtained by the data input module (Data) and the obtained machine learning model (IFA2), the explanatory output (EA) generated by the evaluation module (Gen) and the assessment received by the receiving module;
• a second sending module that sends the assessment of the predicted anomaly (IFA3) made by the human (expert) as a correctly or incorrectly predicted anomaly (IFA3) to the anomaly detection module (IF-Anom) to improve the machine learning model (IFA2).

8. System (HF x-AI) according to one of the preceding claims, configured, in the explanation of a currently predicted anomaly (IFA3), to compare sensor data or regions of the sensor data for this current anomaly (IFA3) with sensor data of predicted anomalies (IFA3) stored in a memory module (Mem) of the system (HF x-AI), to compare an explanatory output (EA) for this current anomaly (IFA3) with explanatory outputs (EA) of predicted anomalies (IFA3) stored in the memory module (Mem) and/or to compare a combination of the sensor data and the explanatory output (EA) respectively for this current anomaly (IFA3) with corresponding combinations of predicted anomalies (IFA3) stored in the memory module (Mem), wherein the system (HF x-AI) is configured to determine the comparisons by executing an algorithm in which distance dimensions are implemented.

9. System (HF x-AI) according to one of the preceding claims, configured to present initial sensor data (IFA1) in another data space and to generate the explanatory output (EA) in this data space.

10. System (HF x-AI) according to any of the preceding claims, configured to initiate sampling at an increased frequency for the sensor data, regions of the sensor data, or variables derived therefrom that are responsible for the anomaly (IFA3) predicted by the anomaly detection module.

11. Use of a system (HF x-AI) according to one of the preceding claims during a model development of an anomaly detection module (IF-Anom), wherein, on the basis of an explanatory output (EA) of the system (HF x-AI), in a training process of a machine learning model (IFA2) executed by the anomaly detection module (IF-Anom) it is ensured that no false, random or irrelevant aspects of training data are learned.

12. Method for monitoring an anomaly detection based on artificial intelligence (AI) in high-frequency sensor data (Data2) or variables derived therefrom of an industrial production process (IF), the method comprising the steps of:
obtaining high-frequency sensor data (IFA1) processed by an anomaly detection module (IF-Anom) on which a machine learning model (IFA2) executed by the anomaly detection module (IF-Anom) predicted an anomaly, obtaining the machine learning model (IFA2) and obtaining the predicted anomaly (IFA3) (C1); generating an explanatory output (EA) for the predicted anomaly (IFA3) by means of a system (HF x-AI) according to one of Claims 1 to 10 (C2); sending the explanatory output (EA) to a human assessor (expert) (C3); human assessment of the predicted anomaly (IFA3) as a correctly or incorrectly predicted anomaly (IFA3) on the basis of the explanatory output (EA) (C4); sending the assessment to a system (HF x-AI) (B3), the anomaly detection module (IF-Anom) (E4) and/or to a respectively affected production step (PS) of the industrial production process (IF) (B5) by means of a human-machine interface (HMI) (C5).

13. Use of a system (HF x-AI) according to one of Claims 1 to 10 for monitoring an anomaly detection based on artificial intelligence (AI) in an end-of-line (EOL) acoustic test of a transmission (G), comprising the steps of:
• driving the transmission (G) with a rotational speed profile, measuring the resulting structure-borne sound by means of acoustic sensors (S) and obtaining structure-borne sound time series (DI);
• transforming the structure-borne sound time series into a frequency space and obtaining sonagrams (Sona) (D2);
• classifying the sonagrams (Sona) into the classes normal and non-normal (D3) on the basis of predefined limit values for specific frequency ranges;
• processing the sonagrams (Sona) by an artificial neural network (AI, ISA2) trained to predict anomalies on the sonagrams (Sona) (D4);
• if the artificial neural network (AI, ISA2) predicts an anomaly on a sonagram (Sona) classified as normal, generating an explanatory output (EA) for the predicted anomaly (ISA3) (D5);
• on the basis of the explanatory output (EA), displaying to a human assessor (expert) the regions of the sonagram (Sona) responsible for the predicted anomaly (IFA3) (D6).

14. Computer program for monitoring an anomaly detection based on artificial intelligence (AI) in high-frequency sensor data (Data2) or variables derived therefrom of an industrial production process (IF), comprising instructions which cause a computer to carry out the steps of the method according to Claim 12 when the computer program runs on the computer.

## Revendications

1. Système (HF x-AI) destiné à générer une sortie explicative (EA) perceptible par un être humain (expert) pour une anomalie (IFA3) prédite par un module de reconnaissance d'anomalies (IF-Anom) sur des données de capteurs à haute fréquence (Data2) ou des grandeurs dérivées de celles-ci d'un processus de fabrication industriel (IF),
les données à haute fréquence étant des données qui ont été enregistrées à un taux d'échantillonnage élevé supérieur à 9 kHz à l'aide de capteurs réels,
les capteurs réels étant des capteurs de température, des capteurs de vibration, des capteurs de force, des capteurs de pression, des capteurs optiques et/ou des capteurs destinés à mesurer la taille d'un composant,
le module de reconnaissance d'anomalies (IF-Anom) prédisant l'anomalie lorsque le module de reconnaissance d'anomalies (IF-Anom) classifie les données à haute fréquence (Data2) ou les plages des données à haute fréquence (Data2), qui décrivent un état (Z) d'une machine (PM), d'un composant et/ou d'un produit (G) du processus de fabrication (IF), comme s'écartant des données observables normalement attendues,
le processus de fabrication industrielle (IF) étant divisé en une ligne de production principale et des lignes de production secondaires, les lignes de production étant subdivisées en étapes de production individuelles (PS, PS1-PS3) qui se complètent, et un contrôle de fin de ligne (EOL) d'une transmission étant effectué à la fin de la ligne de production principale, le système (HE x-AI) étant un système distribué qui comprend les capteurs et une infrastructure en nuage, au moins les capteurs dans le système étant disposés localement au niveau des étapes de production (PS, PS1-PS3) du processus de fabrication industriel (IF) et au moins le calcul de la sortie explicative (EA) étant effectué dans l'infrastructure en nuage,
et le système (HF x-AI) étant configuré,
• pour, sur la base des données à haute fréquence (IFA1, Data2) ou des plages des données à haute fréquence (IFA1, Data2) traitées par le module de reconnaissance d'anomalies (IF-Anom), d'un modèle d'apprentissage automatique (IFA2) qui exécute le module de reconnaissance d'anomalies (IF-Anom) sur les données à haute fréquence (IFA1, Data2) ou les plages des données à haute fréquence (IFA1, Data2), et l'anomalie prédite (IFA3) au moyen du modèle d'apprentissage automatique (IFA2), calculer une explication pour l'anomalie prédite (IFA3) ;
• pour déterminer, pour le calcul de l'explication, un masque d'explication (EM) qui modifie les données à haute fréquence (IFA1, Data2) ou les plages des données à haute fréquence (IFA1, Data2) sur lesquelles l'anomalie (IFA3) a été prédite, de telle sorte que le module de reconnaissance d'anomalies (IF-Anom) classe comme normales les données de capteur masquées par le masque d'explication (EM) ;
• pour optimiser les valeurs (W) du masque d'explication (EM) par traitement itératif du modèle d'apprentissage automatique (IFA2) sur les données à haute fréquence (IFA1, Data2) respectivement masquées, le masque d'explication (EM) optimisé présentant des plages des données à haute fréquence (Data2) ou des grandeurs qui en sont dérivées et qui sont pertinentes pour la décision d'explication d'une reconnaissance d'anomalie ;
• pour présenter le masque d'explication (EM) optimisé de manière visuellement perceptible pour un être humain (expert), le système (HF x-AI) orientant la présentation de la sortie explicative (EA) de manière à rendre possible, améliorer ou conditionner en fonction de l'objet la perception des plages pertinentes pour la prise de décision par l'être humain (expert) d'une certaine manière, et d'envoyer la sortie explicative (EA) perceptible par l'être humain (expert) à l'être humain (expert) par le biais d'une interface homme-machine du système (HE x-AI), l'être humain (expert) reconnaissant, sur la base du masque explicatif (EM) optimisé, quelles données à haute fréquence (IFA1, Data2), plages de données à haute fréquence (IFA1, Data2) ou grandeurs qui en sont dérivées sont responsables de l'anomalie (IFA3) prédite par le module de reconnaissance d'anomalies (IF-Anom).

2. Système (HF x-AI) selon la revendication 1, configuré pour représenter de manière visuellement perceptible par l'être humain (expert) le masque explicatif (EM) optimisé, une combinaison de données initiales du capteur (IFA1) ou de grandeurs qui en sont dérivées et du masque explicatif (EM) optimisé ou une représentation côte à côte des données initiales du capteur (IFA1) ou de grandeurs qui en sont dérivées et du masque explicatif (EM) optimisé.

3. Système (HF x-AI) selon la revendication 2, configuré pour optimiser les valeurs (W) du masque explicatif (EM) dans le cadre de la ou des conditions limites de telle sorte que
• la modification des données initiales du capteur (IFA1) ou des grandeurs qui en découlent est minimale ;
• la modification des données initiales du capteur (IFA1) ou des grandeurs qui en sont dérivées se concentre sur des plages localisées des données du capteur ;
• la modification des données initiales du capteur (IFA1) ou des grandeurs qui en sont dérivées favorise les plages connexes des données initiales du capteur ou des grandeurs qui en sont dérivées par rapport aux données ponctuelles du capteur ; et/ou
• les valeurs optimisées (W) du masque explicatif (EM) se situent dans la plage des valeurs observables attendues ou des valeurs physiquement possibles.

4. Système (HF x-AI) selon la revendication 3, configuré pour perturber les données initiales du capteur (IFA1) ou les grandeurs qui en sont dérivées et/ou le masque explicatif (EM) avec des valeurs aléatoires.

5. Système (HF x-AI) selon l'une des revendications précédentes, le masque explicatif (EM) ayant la même dimension que les données initiales du capteur (IFA1) ou les grandeurs qui en sont dérivées, et le système (HF x-AI) étant configuré pour ajouter de manière itérative le masque explicatif (EM) aux données initiales du capteur (IFA1) ou aux grandeurs qui en sont dérivées et/ou pour multiplier de manière itérative le masque explicatif (EM) par les données initiales du capteur (IFA1) ou les grandeurs qui en sont dérivées.

6. Système (HF x-AI) selon l'une des revendications 1 à 4, le masque explicatif (EM) ayant initialement une dimension inférieure à celle des données initiales du capteur (IFA1) ou des grandeurs qui en sont dérivées, et le système (HF x-AI) étant configuré pour déterminer, au moyen d'un suréchantillonnage, un masque explicatif (EM) qui a la même dimension que les données initiales du capteur (IFA1) ou les grandeurs qui en sont dérivées.

7. Système (HF x-AI) selon l'une des revendications précédentes, comprenant
• un module d'entrée de données (Data) qui reçoit les données de capteur (IFA1) ou des plages des données de capteur traitées par le module de reconnaissance d'anomalies (IF-Anom), le modèle d'apprentissage automatique (IFA2) qui exécute le module de reconnaissance d'anomalies (IF-Anom) sur les données de capteur (Data2) ou des plages des données de capteur, et reçoit l'anomalie prédite (IFA3) au moyen du modèle d'apprentissage automatique (IFA2) ;
• un module d'évaluation (Gen) qui reçoit les données (IFA1, IFA3) obtenues par le module d'entrée de données (Data) et le modèle d'apprentissage automatique (IFA2) obtenu et génère la sortie explicative (EA) sur cette base, le module d'évaluation (Gen) comprenant un premier module d'envoi qui envoie la sortie explicative (EA) à l'être humain (Expert) ;
• un module de mémoire (Mem) comprenant un module de réception qui reçoit une évaluation de l'anomalie prédite (IFA3) effectuée par l'être humain (Expert) sur la base de la sortie explicative (EA) en tant qu'anomalie prédite (IFA3) correcte ou incorrecte, le module de mémoire (Data) recevant et stockant les données (IFA1, IFA3) reçues par le module d'entrée de données (Data) et le modèle d'apprentissage automatique (IFA2) reçu, la sortie explicative (EA) générée par le module d'évaluation (Gen) et l'évaluation reçue par le module de réception ;
• un deuxième module d'émission qui envoie l'évaluation de l'anomalie prédite (IFA3) effectuée par l'être humain (expert) au module de reconnaissance d'anomalies (IF-Anom) comme étant une anomalie prédite (IFA3) correcte ou incorrecte afin d'améliorer le modèle d'apprentissage automatique (IFA2).

8. Système (HF x-AI) selon l'une des revendications précédentes, configuré pour, lors de l'explication d'une anomalie (IFA3) actuellement prédite, comparer des données de capteur ou des plages de données de capteur pour cette anomalie (IFA3) actuelle avec des données de capteur d'anomalies prédites (IFA3) stockées dans un module de mémoire (Mem) du système (HF x-AI), de comparer une sortie d'explication (EA) pour cette anomalie actuelle (IFA3) avec des sorties d'explication (EA) d'anomalies prédites (IFA3) stockées dans le module de mémoire (Mem) et/ou comparer une combinaison des données de capteur et de la sortie explicative (EA) respectivement pour cette anomalie (IFA3) actuelle avec des combinaisons correspondantes d'anomalies (IFA3) prédites stockées dans le module de mémoire (Mem), le système (HF x-AI) étant configuré pour déterminer les comparaisons en exécutant un algorithme dans lequel sont mises en œuvre des mesures de distance.

9. Système (HF x-AI) selon l'une des revendications précédentes, configuré pour afficher des données de capteur initiales (IFA1) dans un autre espace de données et pour générer la sortie explicative (EA) dans cet espace de données.

10. Système (HF x-AI) selon l'une des revendications précédentes, configuré pour initier un échantillonnage à une fréquence accrue pour les données du capteur, les plages de données du capteur ou les grandeurs qui en sont dérivées, qui sont responsables de l'anomalie prédite par le module de reconnaissance d'anomalies (IFA3).

11. Utilisation d'un système (HF x-AI) selon l'une des revendications précédentes pendant le développement d'un modèle d'un module de reconnaissance d'anomalies (IF-Anom), la garantie étant apportée, sur la base d'une sortie explicative (EA) du système (HF x-AI) dans un processus d'apprentissage d'un modèle d'apprentissage automatique (IFA2) exécuté par le module de reconnaissance d'anomalies (IF-Anom), qu'aucun aspect erroné, aléatoire ou non pertinent des données d'entraînement n'est appris.

12. Procédé de surveillance d'une reconnaissance d'anomalies basée sur l'intelligence artificielle (IA) dans des données de capteurs à haute fréquence (Data2) ou des grandeurs dérivées de celles-ci d'un processus de fabrication industriel (IF), le procédé comprenant les étapes suivantes :
obtention de données de capteur à haute fréquence (IFA1) traitées par un module de reconnaissance d'anomalies (IF-Anom) sur lesquelles un modèle d'apprentissage automatique (IFA2) exécuté par le module de reconnaissance d'anomalies (IF-Anom) a prédit une anomalie, obtention du modèle d'apprentissage automatique (IFA2) et obtention de l'anomalie prédite (IFA3) (C1) ; génération d'une sortie explicative (EA) pour l'anomalie prédite (IFA3) à l'aide d'un système (HF x-AI) selon l'une des revendications 1 à 10 (C2) ; envoi de la sortie explicative (EA) à un évaluateur humain (expert) (C3) ; évaluation humaine de l'anomalie prédite (IFA3) en une anomalie prédite (IFA3) correcte ou incorrecte sur la base de la sortie explicative (EA) (C4) ; envoi de l'évaluation à un système (HF x-AI) (B3), au module de reconnaissance d'anomalies (IF-Anom) (E4) et/ou à une étape de production (PS) respectivement concernée du processus de fabrication industrielle (IF) (B5) à l'aide d'une interface homme-machine (HMI) (C5).

13. Utilisation d'un système (HF x-AI) selon l'une des revendications 1 à 10 pour surveiller une reconnaissance d'anomalies basée sur l'intelligence artificielle (AI) lors d'un contrôle acoustique en fin de ligne (EOL) d'une transmission (G), comprenant les étapes suivantes :
• entraînement de la transmission (G) avec un profil de vitesse de rotation, mesure du bruit solidien généré au moyen de capteurs acoustiques (S) et obtention de séries chronologiques de bruit solidien (DI) ;
• transformation des séries chronologiques de bruits solidiens en un espace fréquentiel et obtention de sonagrammes (Sona) (D2) ;
• sur la base de valeurs limites prédéfinies pour certaines plages de fréquences, classification des sonagrammes (Sona) en deux catégories : normal et anormal (D3) ;
• traitement des sonagrammes (Sona) par un réseau neuronal artificiel (AI, ISA2) qui est entraîné pour prédire les anomalies sur les sonagrammes (Sona) (D4) ;
• si le réseau neuronal artificiel (AI, ISA2) prédit une anomalie sur un sonagramme (Sona) classé comme normal, génération d'une sortie explicative (EA) pour l'anomalie prédite (ISA3) (D5) ;
• sur la base de la sortie explicative (EA), affichage d'une évaluation humaine (Expert) des plages du sonagramme (Sona) responsables de l'anomalie prévue (IFA3) (D6).

14. Programme informatique destiné à surveiller une reconnaissance d'anomalies basée sur l'intelligence artificielle (IA) dans des données de capteurs à haute fréquence (Data2) ou des grandeurs dérivées de celles-ci d'un processus de fabrication industriel (IF), comprenant des instructions qui amènent un ordinateur à exécuter les étapes du procédé selon la revendication 12 lorsque le programme informatique est exécuté sur l'ordinateur.
